# EUROPÄISCHE PATENTSCHRIFT

(11) **EP 2 795 278 B1**
(45) Veröffentlichungstag und Bekanntmachung des Hinweises auf die Patenterteilung: **12.06.2019**
(21) Anmeldenummer: 12788527.5
(22) Anmeldetag: 20.11.2012
(51) Int. Cl.: B60G 17/019, B60T 8/17, G01L 1/12, F03D 17/00, B60G 7/00

(54) **VORRICHTUNG MIT MESSEINRICHTUNG ZUM MESSEN VON KRÄFTEN UND/ ODER BELASTUNGEN**
DEVICE HAVING A MEASURING APPARATUS FOR MEASURING FORCES AND/OR LOADS
MACHINE POURVUE D'UN DISPOSITIF DE MESURE POUR MESURER DES FORCES ET/OU DES CHARGES

(30) Priorität: 22.12.2011 DE 102011089605
(43) Veröffentlichungstag der Anmeldung: 29.10.2014
(73) Patentinhaber: ZF Friedrichshafen AG, 88046 Friedrichshafen (DE)
(72) Erfinder: HOFMANN, Peter, 82131 Gauting (DE); NACHBAR, Frank, 49448 Lemfoerde (DE); HAEVESCHER, Rainer, 32351 Stemwede (DE)
(86) Internationale Anmeldenummer: PCT/EP2012/073053
(87) Internationale Veröffentlichungsnummer: WO 2013/092068

(56) Entgegenhaltungen:
- EP-A2- 0 432 122
- WO-A2-03/016891
- WO-A2-03/016891
- US-A- 3 664 187
- US-A- 4 364 278
- US-A- 4 920 806
- US-B1- 6 622 577

## Beschreibung

Die vorliegende Erfindung betrifft eine Komponente einer Vorrichtung, beispielsweise eine Fahrwerkskomponente eines (Kraft-)Fahrzeugs oder eine Rotorkomponente einer Windkraftanlage, welche Komponente eine Messeinrichtung zum Messen von Kräften und zumindest einen metallischen, magnetischen Teilbereich aufweist, nach dem Oberbegriff des Patentanspruchs 1. Weiterhin betrifft die vorliegende Erfindung ein Fahrerassistenzsystem für ein Kraftfahrzeug nach dem Oberbegriff des Patentanspruchs 12 sowie ein Diagnosesystem für eine Vorrichtung, vorzugsweise ein Fahrzeug, nach dem Oberbegriff des Patentanspruchs 13.

Es wird von Herstellern allgemein angestrebt, möglichst langlebige Bauteile zur Verfügung zu stellen, welche gleichzeitig einfach und kostengünstig herstellbar sind. Hierzu werden Messkonzepte (weiter-) entwickelt, mittels derer die an den Bauteilen auftretenden Belastungen in Form von Kräften oder Momenten und dadurch bewirkte Verformungen detektiert und die gemessenen Belastungen bzw. die entsprechenden Messsignale weiterverarbeitet und/oder zu Diagnosezwecken genutzt werden können.

Aus der WO 03/016891 A2 ist ein Sensor mit einer ersten Spule als ein Felderzeugungsmittel und einer zweiten Spule als Detektionsmittel bekannt. Der Sensor kann an eine zu überwachende Komponente angebracht werden.

Der US 6,622,577 B1 ist eine Sensoreinrichtung zu entnehmen, bei der die Spule zum Erzeugen des Feldes zugleich auch die Funktion der Detektierung übernimmt. Eine bauliche Trennung zwischen einem Felderzeugungsmittel und einem Detektionsmittel ist hier nicht vorgesehen.

Aus der US 4,364,278 A ist die Verwendung eines Ringtorduktors mit drei Polringen bekannt, wobei am mittleren Polring erregbare primäre Spulen und an den beiden äußeren Polringen sind sekundäre Spulen angeordnet, in denen ein Ausgangssignal induziert werden kann.

Der US 4,920,806 A ist die Verwendung eines Dehnungsstreifens oder mehrerer Dehnungsstreifen zu entnehmen, wobei der Dehnungsstreifen jeweils zwei in einer Ebene angeordnete Spulen hat.

Aus der DE 10 2008 001 006 A1 ist eine Radaufhängung für ein Fahrzeug bekannt, welche mehrere Radaufhängungselemente umfasst, wobei die Verformung in wenigstens einem Element der Radaufhängung mittels einer speziellen Messanordnung erfasst wird. Hierzu ist ein spezielles Präparieren des Bauteils, an dem die Verformung gemessen werden soll, erforderlich. Dies erfolgt beispielsweise durch das Aufbringen einer dauerhaften Magnetisierung mit lokal unterschiedlicher Ausprägung nach Art einer sogenannten magnetischen Kodierung.

Nachteilig hierbei ist, dass ein speziell für diese Anwendung geeigneter und präparierter Werkstoff verwendet werden muss, welcher Werkstoff selbst das zu messende Bauteil darstellt oder als Zusatzwerkstoff in das Bauteil eingearbeitet wird. Eine spezielle magnetische Kodierung des Werkstoffs ist sehr kostenaufwändig und macht einen Einsatz des Messverfahrens an - hinsichtlich der Werkstoffbeschaffenheiten - beliebigen Werkstoffen unmöglich. Darüber hinaus liegt eine weitere Schwierigkeit der magnetischen Kodierung in deren nur schwer oder gar nicht zu gewährleistender Langzeitstabilität. Ein weiterer Nachteil ist darin zu sehen, dass die Erfassung und Auswertung eines statischen Magnetfelds anfällig gegenüber umliegenden Störfeldern ist, und umgekehrt, so dass im Automobilbereich Hersteller die Vermeidung statischer Magnetfelder vorschreiben.

Bei speziellen Anwendungen, wie beispielsweise Fahrwerken, ist es wünschenswert, quasi beliebige Werkstoffe für die Fertigung entsprechender Komponenten einzusetzen, um die Herstellprozesse unverändert bzw. zumindest kostengünstig belassen zu können.

Der vorliegenden Erfindung liegt daher die Aufgabe zugrunde, eine Komponente einer Vorrichtung der eingangs genannten Art anzugeben, welche die Nachteile aus dem beschriebenen Stand der Technik überwindet und welche eine einfache kostengünstige Ausgestaltung der Komponente hinsichtlich der verwendeten Messeinrichtung erlaubt.

Gelöst ist diese Aufgabe mittels einer Komponente einer Vorrichtung, welche eine Einrichtung zum Messen von Kräften und zumindest einen metallischen, magnetischen Teilbereich aufweist, gemäß Anspruch 1. Eine erfindungsgemäße Komponente ist Bestandteil eines Fahrerassistenzsystems für ein Fahrzeug gemäß Anspruch 12 und eines Diagnosesystems für eine Vorrichtung, insbesondere für ein Fahrzeug, gemäß Anspruch 13. Vorteilhafte Weiterbildungen der erfindungsgemäßen Vorrichtungskomponente finden sich in den Unteransprüchen 2 bis 11. Hiermit wird der Wortlaut dieser Unteransprüche durch ausdrückliche Bezugnahme in die Beschreibung aufgenommen, um Textwiederholungen zu vermeiden.

Die erfindungsgemäße Komponente einer Vorrichtung, welche Komponente eine Messeinrichtung zum Messen von Kräften und zumindest einen metallischen, magnetischen Teilbereich aufweist, zeichnet sich dadurch aus, dass die Messeinrichtung mindestens ein Felderzeugungsmittel zum Erzeugen eines elektromagnetischen Wechselfeldes und ein Detektionsmittel zum Detektieren von Änderungen des erzeugten Magnetfeldes umfasst, welches Felderzeugungsmittel und welches Detektionsmittel derart an dem metallischen, magnetischen Teilbereich der Komponente angeordnet und mit diesem zusammenwirkend ausgebildet sind, dass mittels der Messeinrichtung abhängig von Messsignalen des Detektionsmittels auf die Komponente einwirkende Kräfte und/oder Verformungen der Komponente detektierbar sind.

Das physikalische Verfahren zum Detektieren von Kräften und/oder Verformungen der Komponente und ein entsprechender Sensor sind von der Polyresearch AG, Starnberg/Deutschland, entwickelt und zum Schutzrecht angemeldet worden. Dieses Verfahren vermeidet die oben erläuterten Nachteile, da eine dauerhafte magnetische Kodierung der Werkstoffe nicht erforderlich ist und ermöglicht es auf diese Weise, einen quasi beliebigen, metallischen Werkstoff für die Herstellung der Komponente zu verwenden, an welchem im Messbereich ein elektromagnetisches Wechselfeld angelegt bzw. erzeugt wird. Es lassen sich folglich beliebige metallische Werkstoffe einsetzen, welche lediglich zumindest kurzzeitig magnetisierbar sein müssen. Das Detektionsmittel dient dazu, Änderungen des mittels des Felderzeugungsmittels erzeugten elektromagnetischen Wechselfeldes zu detektieren, welche Änderungen durch mechanische Belastungen und Verformungen der Komponente hervorgerufen werden. Ein derartiges Wechselfeld bietet den Vorteil, dass es unempfindlich auf umliegende Störfelder reagiert bzw. keine schädliche Wechselwirkung mit weiterer Elektronik der Vorrichtung bewirkt. Das Messverfahren und bevorzugte konstruktive Ausgestaltungen der Messeinrichtung (Sensor) sind im Anhang zu dieser Anmeldung detailliert beschrieben, worauf vollumfänglich Bezug genommen wird. Der entsprechende Text basiert auf einer parallelen Patentanmeldung der Polyresearch AG mit gleichem Zeitrang.

Gemäß einer bevorzugten Ausgestaltung der Erfindung handelt es sich bei der Vorrichtung um eine Windkraftanlage. In diesem Zusammenhang kann die Komponente ein beliebiges, im Betrieb der Windkraftanlage bewegtes und/oder belastetes Element der Windkraftanlage sein, beispielsweise ein Rotorblatt, eine Rotorwelle, ein Getriebeelement oder dergleichen, ohne dass die Erfindung auf die exemplarisch genannten Teile einer Windkraftanlage beschränkt wäre.

Eine besonders bevorzugte Ausführungsform der erfindungsgemäßen Komponente einer Vorrichtung zeichnet sich dadurch aus, dass die Vorrichtung ein Fahrwerk eines Fahrzeugs darstellt und·dass die Komponente entsprechend als eine Fahrwerkskomponente ausgebildet ist. Insbesondere kann die Komponente ohne Beschränkung als eine der folgenden Fahrwerkskomponenten ausgebildet sein:
Dämpferelement, vorzugsweise Kolbenstange eines Dämpferelementes;
Lenker, vorzugsweise Querlenker, Zweipunktlenker, Mehrpunktlenker;
Verbindungsstrebe;
Pendelstütze;
Stabilisator, vorzugsweise Wankstabilisator;
Lenkungselement, vorzugsweise Lenkstange, Lenksäule
oder Spurlenker.

Speziell im Bereich der Fahrwerke sind Kenntnisse über die an der entsprechenden Komponente wirkenden Kräfte bzw. Verformungen wünschenswert, um beispielsweise Bauelemente rechtzeitig vor deren Versagen auszutauschen oder um im Zusammenhang mit einer aktiven Fahrwerksbeeinflussung Kenntnis über das aktuelle Fahrverhalten zu erlangen. Beispielsweise bei einer Fahrwerkskomponente nach Art an einer Pendelstütze, welche als kraftführendes Verbindungselement zwischen Stabilisator und Fahrwerk fungiert, können die ermittelten Zug- bzw. Druckkräfte oder auch die auftretenden Biegebelastungen als Messgröße für ein mechatronisches Stabilisierungssystem dienen, welches (automatisch) in den Fahrwerkszustand eingreift, um das Fahrverhalten zu beeinflussen.

Obwohl nachfolgend nur noch von einer Fahrwerkskomponente die Rede ist, lassen sich die nachfolgenden Ausführungen im Rahmen der vorliegenden Erfindung ohne weiteres auch auf die bereits erwähnten Windkraftanlagen erstrecken. In Ergänzung zu den nachfolgend angeführten Spulen- bzw. Sensoranordnungen ist bei rotierenden Wellen ein zusätzliches Messmittel erforderlich, welches während einer Umdrehung den Abstand zur Welle misst, so dass dieser erfassbar und rechnerisch ermittelbar ist.

Eine bevorzugte Ausführungsform der erfindungsgemäßen Fahrwerkskomponente sieht vor, dass das Felderzeugungsmittel und/oder das Detektionsmittel als Spulen ausgebildet sind oder zumindest eine Spule umfassen. Hierbei wird die Spule des Felderzeugungsmittels als Erregerspule und die Spule des Detektionsmittels als Messspule bezeichnet. Die Erregerspule induziert ein Wechselfeld in die Fahrwerkskomponente, welches Wechselfeld für die Zeit der Messung durch das Material der Komponente aufgenommen und beeinflusst wird. Bei einer Verformung und/oder Längung/Stauchung durch an der Fahrwerkskomponente angreifende Zug- bzw. Druckkräfte ändert sich das magnetische Wechselfeld. Diese Änderung wird von der Messspule detektiert, deren Messsignale in geeigneter Weise elektronisch weiterverwertet werden können. Eine Ausbildung von Felderzeugungsmittel und Detektionsmittel als Spulen ermöglicht es, einfache, kostengünstige und in verschiedenen Dimensionen erhältliche Elemente zu verwenden. Die Erregerspule kann mit einem sogenannten Feldkonzentrator zusammenwirken, der nach Art eines Spulenkerns (Eisenkern) ausgebildet ist. Auf bevorzugte Ausformungen des Feldkonzentrators wird im Anhang detailliert eingegangen.

Vorteilhafterweise sind das Felderzeugungsmittel und das Detektionsmittel in einem Gehäuse ortsfest angeordnet, welches Gehäuse wiederum ortsfest an der Fahrwerkskomponente angeordnet ist. Vorzugsweise sind das Felderzeugungsmittel und das Detektionsmittel in dem Gehäuse mittels einer ausgehärteten Gussmasse (z. B. Kunststoffguss) ortsfest angeordnet. Eine solche Ausgestaltung bewirkt, dass keine Verschiebung der Felderzeugungsmittel und der Detektionsmittel relativ zueinander bzw. zu der Fahrwerkskomponente erfolgt, was die Messung bzw. deren Auswertung ansonsten negativ beeinflussen könnte. Eine derartige Anordnung bietet den Vorteil, dass keine zusätzlichen Mittel eingesetzt werden müssen, welche bei einer relativen Verschiebung der vorstehend genannten Elemente zueinander zum Korrigieren des dadurch beeinflussten Messsignals erforderlich wären, so dass die Konstruktion insgesamt kostengünstig und konstruktiv einfach zu realisieren ist.

Eine bevorzugte Ausführungsform der erfindungsgemäßen Fahrwerkskomponente sieht vor, dass die Fahrwerkskomponente eine Befestigungsstruktur für das Gehäuse aufweist. Die Befestigungsstruktur ist vorzugsweise einstückig mit der Fahrwerkskomponente ausgebildet, vorzugsweise durch lokales Verformen der Fahrwerkskomponente. Das lokale Verformen der Fahrwerkskomponente kann hierbei entweder derart erfolgen, dass beispielsweise durch Quetschung vorstehende Absätze an der Fahrwerkskomponente ausgebildet werden, oder auch derart, dass Vertiefungen oder Nuten in die Fahrwerkskomponente·eingebracht werden, an bzw. in welchen das Gehäuse beispielsweise durch An-/Einklipsen zu befestigen ist, zu welchem Zweck das Gehäuse in beiden Fällen vorzugsweise entsprechende komplementäre Formgebungen aufweist. Eine einstückige Ausbildung der Befestigungsstruktur mit der Fahrwerkskomponente ermöglicht es, auf zusätzliche Befestigungsbauteile zu verzichten, welche speziell ausgestattet und komplementär zu der Fahrwerkskomponente bzw. dem Gehäuse ausgebildet sein müssten und welche den Kosten- und Montageaufwand erhöhen würden. Es liegt ebenfalls im Rahmen der Erfindung, das Gehäuse kraft- oder stoffschlüssig (z. B. durch Verkleben) an der Fahrwerkskomponente zu fixieren. Das Gehäuse kann aus mehreren Teilen zusammengesetzt sein, wobei die einzelnen Teile ebenfalls sowohl form-, kraft- oder stoffschlüssig (beispielsweise durch Verkleben, Verschweißen, Verrasten, Verklipsen, Verschrauben ...) zusammengefügt werden können.

Vorteilhafterweise ist das Felderzeugungsmittel und/oder das Detektionsmittel beabstandet von der Fahrwerkskomponente angeordnet, wie im Anhang detailliert beschrieben. Eine derartige konstruktive Ausgestaltung ermöglicht eine berührungslose Anordnung von Felderzeugungs- bzw. Detektionsmittel an der Fahrwerkskomponente. Hierdurch lassen sich die inhärenten Nachteile früher verwendeter Dehnungsmessstreifen, welche direkt auf der Oberfläche eines zu überwachenden Bauteils angeordnet sein mussten und sehr anfällig gegenüber umliegenden Störeinflüssen, wie beispielsweise Korrosion, waren, sicher vermeiden.

Eine Weiterbildung der erfindungsgemäßen Fahrwerkskomponente zeichnet sich dadurch aus, dass die Fahrwerkskomponente mindestens eine Schweißnaht aufweist und dass das Felderzeugungsmittel und/oder das Detektionsmittel an der Fahrwerkskomponente zwischen etwa 30 mm und etwa 40 mm, vorzugsweise zwischen etwa 34 mm und etwa 36 mm, höchst vorzugsweise etwa 35 mm, beabstandet von der Schweißnaht angeordnet sind. Untersuchungen der Anmelderin haben ergeben, dass bei einem Idealabstand von 35 mm eine besonders störungsarme Messung möglich ist. Bei einem wesentlich kleineren Abstand zwischen der Schweißnaht der Fahrwerkskomponente und dem Felderzeugungs-/Detektionsmittel besteht die Gefahr, dass aufgrund einer erfolgten Veränderung des Werkstoffgefüges - hervorgerufen durch den Schweißvorgang - falsche bzw. vom Normalfall abweichende Messsignale entstehen. Die Schweißnaht dient der stoffschlüssigen Verbindung bei der Herstellung der Fahrwerkskomponente. So kann z.B. ein Kugelgelenk mittels einer Schweißnaht mit einem Endbereich des Lenkers verbunden sein. Durch den Schweißvorgang ergeht ein Wärmeeintrag in die zu verbindenden Bauteile bei der Herstellung der Fahrwerkskomponente. Dadurch ändert sich die Gefügestruktur derart, dass eine Messung nicht bzw. nur ungünstig möglich ist.

Alternativ kann ein Kugelgelenk auch teilweise, z.B. an seinem Gehäuse aus Kunststoff bestehen. In diesem Fall würde die Verbindung von Kugelgelenk und Endbereich des Lenkers durch Verkleben realisiert. Das Gehäuse kann aber auch direkt an den Endbereich des Lenkers angespritzt werden. Die Verbindung kommt dann durch den Anspritzvorgang zustande. Ein stoffschlüssiges Fügen durch Verkleben oder Schweißung wäre in diesem Fall gar nicht notwendig.

Im Zuge einer anderen Weiterbildung der erfindungsgemäßen Fahrwerkskomponente ist vorgesehen, dass das Felderzeugungsmittel und/oder das Detektionsmittel im Bereich einer neutralen Faser der Fahrwerkskomponente angeordnet ist. Dabei kann weiterhin vorgesehen sein, dass das Detektionsmittel und das Felderzeugungsmittel im Wesentlichen in einer Ebene angeordnet sind, welche Ebene sich weiterhin dadurch auszeichnen kann, dass die neutrale Faser der Fahrwerkskomponente in dieser Ebene liegt. Wie Versuche der Anmelderin gezeigt haben, lassen sich auf diese Weise Messergebnisse erhalten, welche in besonderer Weise dazu geeignet sind, die Belastungen der Fahrwerkskomponente zu bestimmen bzw. zu überwachen. Unter der "neutralen Faser" der Fahrwerkskomponente wird diejenige Faser bzw. Ebene innerhalb des Bauteils verstanden, welche bezogen auf die Hauptbiegerichtung des Bauteils im Wesentlichen keine Streckung oder Stauchung erfährt, wie dies in den Bauteilbereichen außerhalb der neutralen Faser der Fall ist.

Vorteilhafterweise weist die Messeinrichtung mindestens zwei Felderzeugungsmittel und mindestens zwei Detektionsmittel auf, vorzugsweise genau zwei Felderzeugungsmittel und zwei Felddetektionsmittel, wobei höchst vorzugsweise die beiden Felderzeugungsmittel und die beiden Detektionsmittel jeweils auf gegenüberliegenden Seiten der Fahrwerkskomponente angeordnet sind. Eine derartige Anordnung ermöglicht es über Zug- und Druckkräften zu detektieren.

Eine andere bevorzugte Ausführungsform der erfindungsgemäßen Fahrwerkskomponente ist dadurch gekennzeichnet, dass die relative Anordnung von Felderzeugungsmittel und Detektionsmittel zueinander auf beiden Seiten der Fahrwerkskomponente gleich ist. Dies bedeutet, dass sich insgesamt eine symmetrische Anordnung der Bestandteile der Messeinrichtung bezüglich einer gedachten Mittelebene der überwachten Komponente ergibt. Durch die symmetrische Anordnung der Felderzeugungs- bzw. Detektionsmittel lassen sich besondere gute Messergebnisse erzielen, worauf im Anhang genauer eingegangen wird.

Das erfindungsgemäße Fahrerassistenzsystem für ein Fahrzeug, welches Fahrerassistenzsystem eine erfindungsgemäße Fahrwerkskomponente umfasst, ist vorzugsweise nach Art eines der folgenden Systeme ausgebildet:
- ESP (elektronisches Stabilitätsprogramm; auch: ESC),
- ABS (Antiblockiersystem),
- Spurassistenzsystem,
- Fahrwerkstabilisierungssystem, insbesondere umfassend einen aktiv steuerbaren Fahrwerksstabilisator, vorzugsweise mit einem elektrischen, pneumatischen oder hydraulischen Aktuator, höchst vorzugsweise zur Wankstabilisierung des Fahrzeugs.

Die Messsignale des Detektionsmittels werden in dem erfindungsgemäßen Fahrwerksassistenzsystem elektronisch zu Steuerungs- oder Regelungszwecken weiter verarbeitet. Dies sei beispielhaft anhand des Stabilisators erläutert: Ein aus dem Stand der Technik gut bekannter mechanischer Federstab bzw. ein hydraulischer Aktuator wird ersetzt durch einen elektrischen Aktuator, um insbesondere das dauerhafte Verhalten hoher Drücke zu vermeiden. Die Messsignale des Detektionsmittels werden an den Aktuator weitergegeben, welcher aktiv in die Fahrwerkssteuerung des Fahrzeugs eingreift, um beispielsweise bei einer Neigung des Fahrzeugs, welche vorgegebene Grenzwerte überschreitet, die Lage des Fahrzeugs zu stabilisieren (Wankstabilisierung).

Auch die Überwachung einer Windkraftanlage im Betrieb ist auf diese Weise möglich, beispielsweise um den Rotor bei Überlastung stillzulegen.

Das erfindungsgemäße Diagnosesystem für eine Vorrichtung, insbesondere für ein Fahrzeug, umfasst eine erfindungsgemäße Komponente (Fahrwerkskomponente), wobei das Diagnosesystem dazu ausgebildet ist, mittels der Messeinrichtung gewonnene Belastungsdaten der Komponente auslesbar für eine spätere Wartung oder Diagnose zu speichern, vorzugsweise elektronisch. Bei Verwendung der erfindungsgemäßen Fahrwerkskomponente in dem Diagnosesystem können beispielsweise Belastungsgrenzwerte detektiert werden, welche in entsprechenden Fehlerspeichern abgelegt werden. Bei einem Werkstattbesuch kann der Fehlerspeicher des Fahrzeugs ausgelesen werden, wodurch beispielsweise gezielt feststellbar ist, welche Bauteile aufgrund von Überlastung ausgetauscht werden sollten, obwohl möglicherweise noch gar keine sichtbaren Mängel vorliegen. Gleiches gilt analog für die Wartung einer Windkraftanlage.

Weitere Vorteile und Eigenschaften der vorliegenden Erfindung werden im Folgenden anhand der Ausführungsbeispiele erläutert. Dabei zeigt
Figur 1 eine perspektivische Darstellung einer erfindungsgemäßen Fahrwerkskomponente mit Messeinrichtung und die Messeinrichtung einschließendem Gehäuse;
Figur 2 die erfindungsgemäße Fahrwerkskomponente aus Figur 1 ohne Gehäuse;
Figur 3 eine Draufsicht auf die erfindungsgemäße Fahrwerkskomponente mit Messeinrichtung aus Figur 2;
Figur 4 Schnittdarstellung entlang der Linie A-A der Figur 3;
Figur 5 eine Explosionsdarstellung einer erfindungsgemäßen Fahrwerkskomponente mit Messeinrichtung und Gehäuse;
Figur 6 eine leicht gedrehte Ansicht der Explosionsdarstellung aus Figur 5; und
Figur 7 eine Darstellung des zusammengebauten Gegenstands der Figuren 5 und 6.

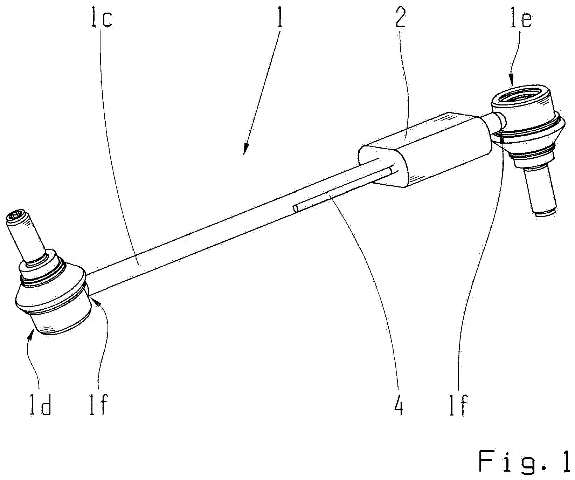

Figur 1 zeigt eine erfindungsgemäße Fahrwerkskomponente 1, welche nach Art der Verbindungsstrebe 1c, z.B. einer Pendelstütze ausgebildet ist und an ihren Enden Kugellager 1d, 1e bzw. entsprechende Lagerhülsen aufweist. Bei Bezugszeichen 1f ist die Verbindungsstrebe 1c mit den Kugellagern 1d, 1e über eine Schweißnaht stoffschlüssig verbunden, was in den Figuren nicht explizit erkennbar ist. An der Fahrwerkskomponente 1 ist ein Gehäuse 2 angeordnet, welches vorzugsweise in Kunststoff ausgebildet ist. In dem Gehäuse 2 ist eine in Figur 1 nicht sichtbare Messeinrichtung der in der Einleitung und im Anhang beschriebenen Art angeordnet, die nachfolgend anhand der weiteren Figuren noch genauer beschrieben wird. Das Gehäuse 2 schützt die Bestandteile der Messeinrichtung und legt sie gegenüber der Verbindungsstrebe 1c bzw. der Komponente 1 fest. Von dem Gehäuse 2 weg führen Kabel 4 zum Übertragen der ermittelten Messsignale. Das Ziel des Kabelanschlusses kann beispielsweise die Steuerungseinrichtung eines Stabilisators oder ein elektronischer Fehlerspeicher des Fahrzeugs sein. Außerdem beinhalten die Kabel 4 Leitungen zur Ansteuerung und zur elektrischen Energieversorgung der Messeinrichtung.

In dem Gehäuse 2 sind Felderzeugungsmittel bzw. Detektionsmittel der mehrfach erwähnten Messeinrichtung (nicht gezeigt) angeordnet. Die Anordnung der vorstehend genannten Mittel wird anhand der nachfolgenden Figuren erläutert.

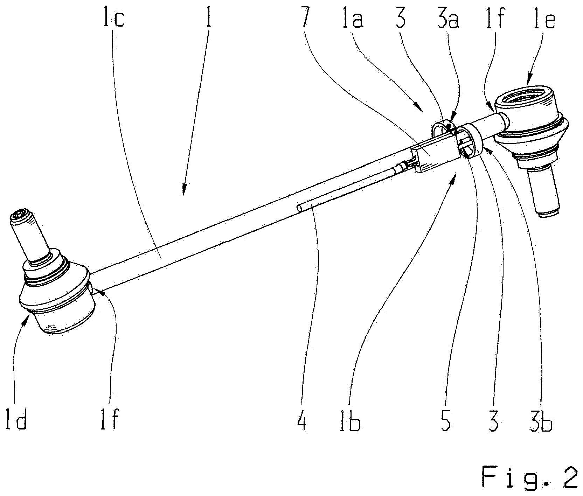

Figur 2 zeigt die Fahrwerkskomponente 1 aus Figur 1, jedoch ohne das Gehäuse 2, so dass die in Figur 2 mit Bezugszeichen 1a bezeichnete Messeinrichtung sichtbar ist. Die Messeinrichtung 1a umfasst Felderzeugungsmittel 3, genauer: ein erstes Felderzeugungsmittel 3a und ein zweites Felderzeugungsmittel 3b, Detektionsmittel 5 (von denen nur eines erkennbar ist) und elektronische Mittel 7 zur Weiterverarbeitung (Auswertung, Speicherung, ...) der von der Messeinrichtung 1a gelieferten Messsignale. Mit den elektronischen Mitteln 7 sind die bereits erwähnten Kabel 4 verbunden. Die Kabel 4 dienen neben einer Übertragung von Mess- bzw. Auswertesignalen insbesondere auch zur Energieversorgung der gesamten Messeinrichtung 1a einschließlich der eigentlichen Sensoren (Bezugszeichen 3 und 5) und der zugehörigen Elektronik 7.

Die Felderzeugungs- und Detektionsmittel 3, 5 befinden sich in einem metallischen, magnetisierbaren Teilbereich 1b der Komponente 1 bzw. der Verbindungsstrebe 1c. Es liegt jedoch im Rahmen der Erfindung die gesamte Verbindungsstrebe 1c in dem genannten metallischen, magnetisierbaren Material auszubilden. Der genannte Teilbereich 1b umfasst dann die gesamte Verbindungsstrebe 1c.

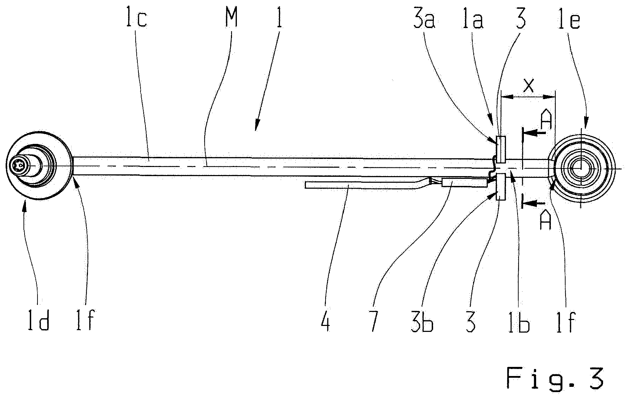

Figur 3 zeigt die Draufsicht auf die Fahrwerkskomponente 1 aus Figur 2. Die beiden Felderzeugungsmittel 3a, b und die (hier nicht erkennbaren) Detektionsmittel sind bezogen auf das (rechte) Ende der Verbindungsstrebe 1c auf gleicher Höhe und im gleichen Abstand zu der Verbindungsstrebe 1c an der Fahrwerkskomponente 1 angeordnet. Dadurch ergibt sich eine symmetrische Ausgestaltung der Messeinrichtung 1a bezogen auf die Mittelebene M der Fahrwerkskomponente 1 bzw. der Verbindungsstrebe 1c.

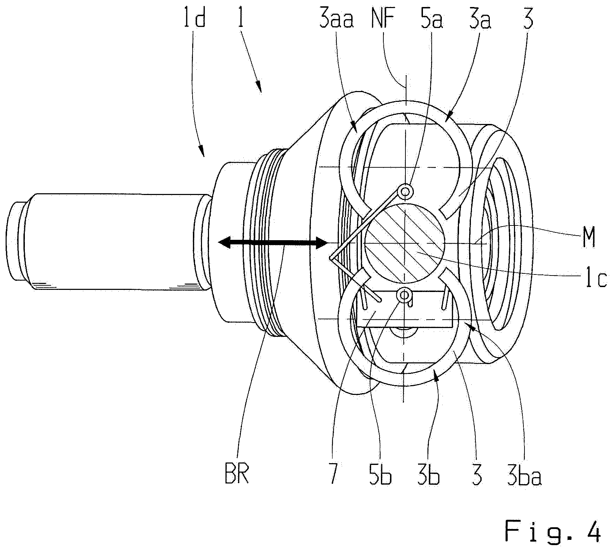

Gemäß Figur 3 befindet sich die Messeinrichtung 1a in einem Abstand x von der Schweißnaht 1f im Bereich des Kugelgelenk 1e bzw. der betreffenden Lagerhülse. Der Abstand x bezeichnet speziell die Entfernung des Mittelpunkts der Detektionsspulen (vgl. z. B. Figur 4) von der Schweißnaht 1f. Ein Wert von x = 35 mm ± 1 mm hat sich in der Praxis als besonders günstig erwiesen.

Figur 4 zeigt eine Schnittdarstellung durch die erfindungsgemäße Fahrwerkskomponente 1 gemäß der Linie A-A in Figur 3. Die Verbindungsstrebe 1c ist von zwei in ihrer Gesamtheit teilringförmigen Felderzeugungsmitteln 3a, b - zumindest teilweise - umschlossen. Das jeweilige teilringförmige Element 3aa, 3ba stellt einen Feldkonzentrator dar, der nach Art eines bekannten Spulenkerns wirkt, worauf im Anhang näher eingegangen wird. Die um den Feldkonzentrator 3aa, 3ba jeweils angeordnete eigentliche Felderzeugungs- oder Erregerspule ist in Figur 4 aus Gründen der Übersichtlichkeit nicht dargestellt. Zwischen den Felderzeugungsmitteln 3a, b und der Verbindungsstrebe 1c sind zwei Detektionsmittel 5a, b angeordnet, wobei das eine Detektionsmittel (Messspule) 5a auf der Seite des ersten Felderzeugungsmittels 3a und das andere Detektionsmittel (Messspule) 5b auf der Seite des zweiten Felderzeugungsmittels 3b angeordnet ist. Des Weiteren ist in Figur 4, bei Bezugszeichen NF, die in der Beschreibungseinleitung definierte neutrale Faser der Fahrwerkskomponente symbolisch eingezeichnet. Es handelt sich hierbei um diejenige gedachte Ebene der Verbindungsstrebe 1c, in welcher Letztere bei Biegebelastung gemäß dem Doppelpfeil BR im Wesentlichen keine Streckung oder Stauchung erfährt, wie dies oberhalb und unterhalb der neutralen Faser NF (rechts und links in Figur 4) der Fall ist.

Die Felderzeugungs- bzw. Detektionsmittel 3a, b; 5a, b sind auf beiden Seiten der Verbindungsstrebe 1c gleichartig angeordnet, wobei die (gedachten) Zentren der einzelnen Mittel auf einer Linie liegen. Dadurch ergibt sich die bereits erwähnte symmetrische Ausgestaltung der Messeinrichtung 1a.

Die insbesondere in Figur 4 noch erkennbaren elektrischen Verbindungen zwischen den Bestandteilen der Messeinrichtung 1a und der Elektronik 7 sind aus Gründen der Übersichtlichkeit nicht explizit bezeichnet.

Die Felderzeugungs- bzw. Detektionsmittel 3, 5 sind gemäß Figur 4 um 90° versetzt zu der Hauptbiegeeinrichtung der Strebe 1c angeordnet, welche durch den Pfeil BR beispielhaft gekennzeichnet ist. Untersuchungen der Anmelderin zufolge ergab eine derartige Anordnung der Messeinrichtung 1a besonders vorteilhafte Messergebnisse.

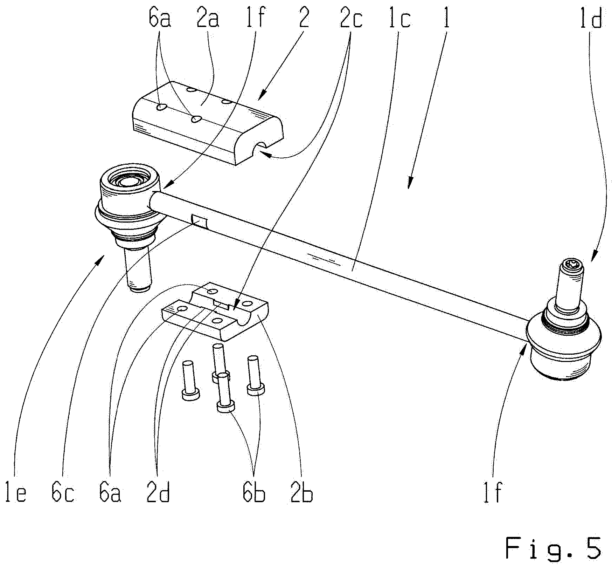

Figur 5 zeigt eine Explosionsdarstellung der erfindungsgemäßen Fahrwerkskomponente 1 mit einem Gehäuse 2, welches Gehäuse 2 aus einer oberen Gehäusehälfte 2a und einer unteren Gehäusehälfte 2b gebildet ist. An den Gehäusehälften 2a, 2b sind korrespondierende Durchbrüche 6a vorgesehen, um die Gehäusehälfte um die Strebe 1c herum über Befestigungsmittel 6b, vorzugsweise in Form von Schrauben oder Schraubenbolzen, zu dem kompletten Gehäuse 2 verbinden zu können. Das Gehäuseinnere ist mit einer (Kunststoff-) Vergussmasse 2c angefüllt, welche die Bestandteile der Messeinrichtung einschließlich der Elektronik schützend umgibt und für deren relative Positionierung sorgt.

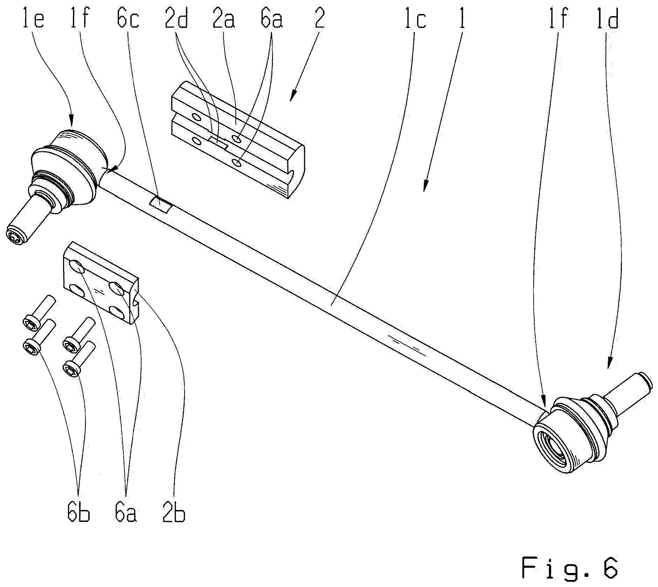

Figur 6 zeigt eine leicht gedrehte Ansicht der erfindungsgemäßen Fahrwerkskomponente 1 aus Figur 5. Ergänzend sei darauf hingewiesen, dass die untere Gehäusehälfte 2b abschnittweise größere Aussparungen 6a als die obere Gehäusehälfte 2a aufweist, zum vollständigen Versenken der Befestigungsmittel 6b. An der Fahrwerkskomponente 1 bzw. der Strebe 1c ist weiterhin eine beiderseitige Befestigungsstruktur 6c in Form einer Vertiefung vorgesehen zum Anordnen des Gehäuses 2. Das Gehäuse 2 weist entsprechend an seiner oberen Hälfte 2a und an seiner unteren Hälfte 2b Vorsprünge 2d auf, die komplementär zu den Vertiefungen 6c an der Strebe 1c ausgebildet sind, um das Gehäuse 2 und damit die Messeinrichtung genau in der vorgesehenen (Mess-) Position an der Strebe 1c fixieren zu können.

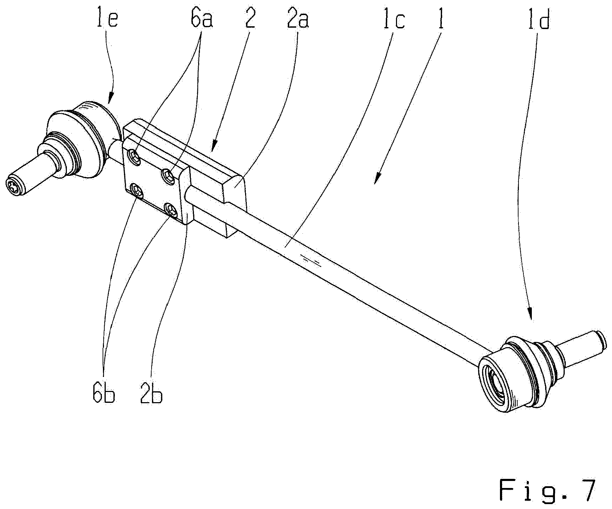

Figur 7 zeigt die Elemente der beiden Explosionsdarstellungen aus den Figuren 5 und 6 im zusammengebauten Zustand, wobei hier die Befestigungsmittel 6b in den Aussparungen 6a versenkt sind.

### Anhang: Detaillierte Beschreibung der Messeinrichtung und des zugehörigen Messverfahrens

Nachfolgend werden vorzugsweise Ausgestaltungen des Messverfahrens und bevorzugte konstruktive Ausgestaltungen der Messeinrichtung (Sensor) beschrieben. Diese Beschreibung basiert auf einer parallelen Patentanmeldung der Polyresearch AG mit gleichem Zeitrang.

Die Messeinrichtung wird nachfolgend ohne Beschränkung der Allgemeinheit als Sensor oder Biegesensor bezeichnet. Ebenso wird nachfolgend ohne Beschränkung der Allgemeinheit das Felderzeugungsmittel als Induktur, Magnetfeld-Generator-Spule oder Primärspule und das Detektionsmittel als Magnet-Sensorelement bezeichnet.

In allen Figuren bezeichnen gleiche Bezugszeichen gleiche oder gleichwirkende Elemente.

### Aktiver Biegesensor

Zum Messen von Biegekräften werden in der Industrie und in Forschungs- und Entwicklungslabors in den meisten Fällen Dehnungsmesssensoren verwendet. Es sind nur wenige alternative Sensorlösungen verfügbar, die eine angemessene Biegesensor-Messleistung bieten können und für die Umgebungsbedingungen geeignet sind, bei denen dieser Sensor eingesetzt werden sollte. Allgemein sind diese Lösungen jedoch zu teuer für die (in der Automobilindustrie, im industriellen Bereich und Verbraucherbereich typische) Massenfertigung.

Es sind keine kostengünstigen Biegesensorlösungen verfügbar für Anwendungen, bei denen das Testobjekt (wie zum Beispiel eine Getriebewelle) in ihrer Verwendung rotiert. Hierzu wird eine kostengünstige und kontaktfreie Messtechnik benötigt. Die folgende Beschreibung bezieht sich auf eine Konstruktion eines nach magnetischen Prinzipien arbeitenden mechanischen Kraftsensors, der mechanische Kräfte an ferromagnetischen Objekten, wie zum Beispiel einer Getriebewelle, einer Schraubendreher-Welle, Drehmomentschlüsseln und einer Bohrmaschinenwelle, erfassen und quantifizieren kann.

### Die einzigartigen Merkmale dieser "aktiven" Sensorlösung sind wie folgt:

- Echt kontaktfreies Sensorprinzip
- Arbeitet mit magnetischen Prinzipien
- Unempfindlich gegenüber Magnetfeldern, die im Testobjekt schon vorhanden/gespeichert sind
- Das Testobjekt braucht in keiner Weise vorbehandelt zu werden (das "aktive" Biegesensormodul wird gegen das Testobjekt gehalten und funktioniert sofort ohne weitere Vorbereitungsmaßnahmen).
- Die Sensorleistung kann sich über die Zeit nicht verschlechtern, da es sich um ein aktives Sensorprinzip handelt.
- Unempfindlich gegenüber Drehmomenten (bei Messungen in der Differenz-Betriebsart I)
- Empfindlich gegenüber einer Biegekraft nur einer einzigen Achse (kein Nebensprechen zwischen X- und Y-Achsen-Biegekräften)
- Funktioniert an Testobjekten, die still stehen oder mit einer beliebigen Drehzahl rotieren.
- Unempfindlich gegenüber Licht, Staub, mechanischen Stößen jeglicher Art!, Wasser, Feuchtigkeit, Öl, ...
- Funktioniert bei jedem beliebigen metallischen Testobjekt-Material, solange es einen Magneten anzieht
- Kann sich verändernde Luftspalte / Abstände zwischen dem Testobjekt und dem Sensormodul tolerieren.
- Keine Obergrenze für Testobjekt-Abmessung (z.B. Wellendurchmesser)
- Kann in einem Temperaturbereich von -50°C bis über +210°C betrieben werden

### Was ist der Unterschied zu anderen Sensortechnologien?

1. Dieser Sensor braucht mit dem Testobjekt physisch NICHT verbunden zu sein. Selbst bei einem Spalt von ein paar Millimetern (zwischen dem Sensor und dem Testobjekt) funktioniert er noch ordnungsgemäß. Daher funktioniert dieser Sensor ganz unabhängig von der Beschaffenheit der TestobjektOberfläche (beschichtet, lackiert, staubig, ...), was für das Messen auf Baustellen, Brücken, Kränen, Gerüsten ideal ist.
2. Dieser Sensor funktioniert mit JEDEM metallischen Material, solange die magnetischen Eigenschaften des Materials dafür ausreichen, einen Permanentmagneten anzuziehen / zu halten (gilt nicht für gesinterte Werkstoffe, die zu spröde sind, wenn Biegekräfte angelegt werden).
3. Das Testobjekt braucht in keinerlei Weise verändert zu werden. Das Testobjekt wird in keiner Weise bearbeitet.

### Sensoraufbau

Der Sensor besteht aus zwei Hauptmodulen:
- eigentliches Sensorelement (unter der Verwendung passiver elektronischer Komponenten aufgebaut), und
- Sensorelektronik

Beide Module können zusammen im selben Gehäuse untergebracht sein, können jedoch auch getrennt voneinander angeordnet und nur durch eine Anzahl Kabel miteinander verbunden werden. Die Länge der Kabel ist durch eine natürliche Grenze eingeschränkt (im Bereich von 2 Metern oder mehr).

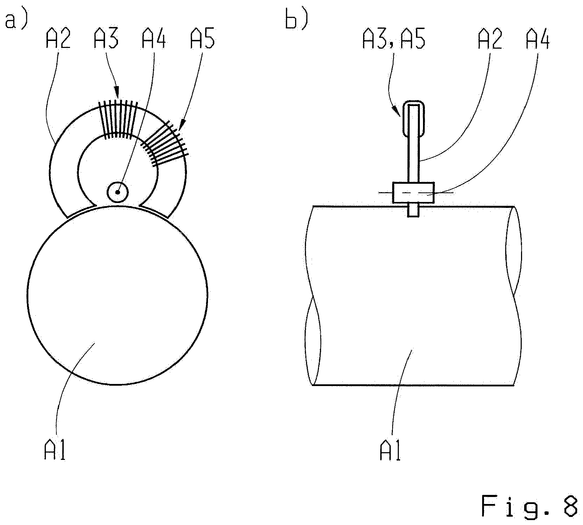

Der Aufbau ist beispielhaft in Figur 8 dargestellt, mit einer Seitenansicht in Figur 8a und einer Vorderansicht in Figur 8b. Dargestellt ist ein Testobjekt A1.

Es handelt sich bei der Darstellung in Figur 8 um nur eine von mehreren möglichen Bauarten des Sensorelements. Die Hauptkomponenten sind in der Zeichnung dargestellt. Diese sind:
- Magnetflusskonzentrator A2
- Magnetfeld-Generator-Spule (Induktor), bzw. Primärspule A3
- Magnet-Sensorelement (kann eine beliebige Art einer Magnetfeld-Sensorvorrichtung sein: Spule, Hall Effekt, MR, GMR, ...) A4
- Wahlweise: Signalrückkopplungsspule (Induktor), bzw. Sekundärspule A5

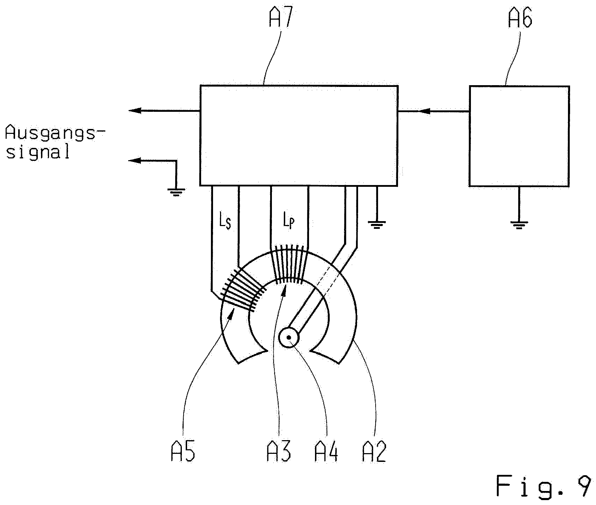

Ein vollständiges und einziges Sensorelement besteht bevorzugt aus all den in Figur 9 dargestellten Komponenten. Die Rückkopplungsspule A5 (Ls - Sekundär-Induktor) kann wahlweise verbaut werden und ist nur dann erforderlich, wenn eventuelle Abstandsänderungen (zwischen dem Testobjekt und dem Sensormodul) automatisch kompensiert werden müssen. Weiterhin sind eine Stromversorgung A6 und die Sensorelektronik A7 dargestellt.

### Wichtig: Die Funktion der Rückkopplungs-Spule kann eingesetzt werden, wenn die Feldgeneratorspule mit einem Wechselspannungs-Ansteuerungssignal betrieben wird.

Die "optionale" Rückkopplungsspule (Ls) wird verwendet, um den Abstand (bzw. den Spalt) zwischen dem Sensorelement und der Testobjektoberfläche zu erfassen und zu messen. Das mit dieser Spule gemessene Signal wird zum Kompensieren der unerwünschten Signalamplitudenmodulation verwendet, die dann auftritt, wenn sich der Abstand zwischen dem Testobjekt und dem Sensorelement ständig ändert. In Anwendungen, bei denen sich der Abstand nicht ändert, ist keine Rückkopplungs-spule erforderlich.

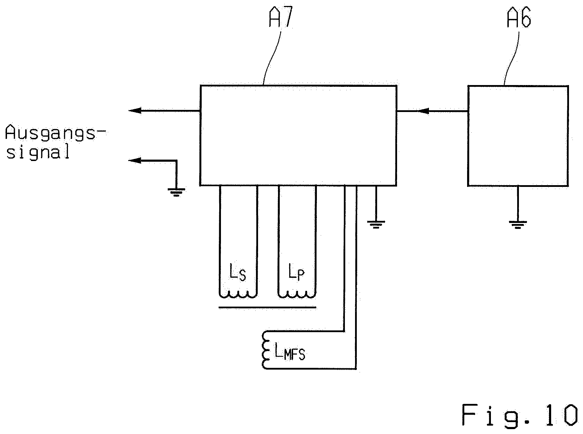

In Figur 10 ist folgendes dargestellt: Die Feldgeneratorspule (LP - Primärinduktor) und die Rückkopplungsspule (LS - Sekundärinduktor) werden auf demselben Flusskonzentrator angeordnet. Von der Feldgeneratorspule erzeugte Signale können von der Rückkopplungsspule erfasst und gemessen werden. Die Signaltransferfunktion wird von dem Abstand zwischen dem Flusskonzentrator und der Testobjektoberfläche beeinflusst. Je kleiner der Luftspalt zwischen den beiden Polen der Flusskonzentrator-Enden und der Testobjektoberfläche ist, desto effizienter ist der magnetische Transfer zwischen Primär- und Sekundärspule. Diese Beziehung ist nicht streng proportional und muss durch die Sensorelektronik linearisiert werden.

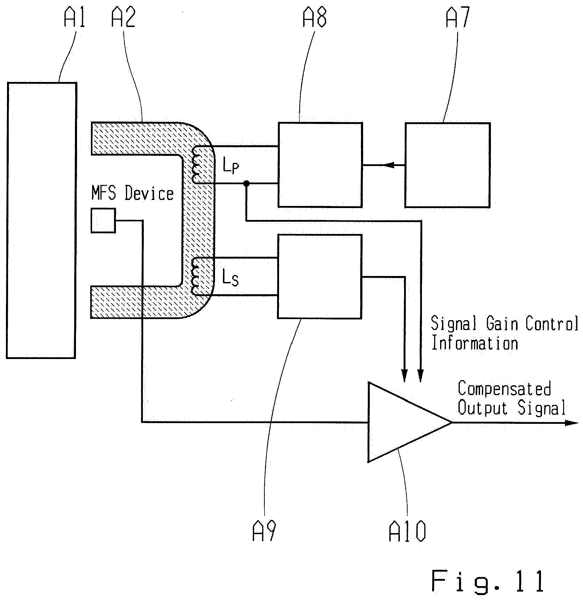

In Figur 11 ist Folgendes dargestellt: Eine Änderung des Abstands zwischen dem Flusskonzentrator und dem Testobjekt führt zu einer Änderung der Amplitude des von der Rückkopplungsspule Ls gemessenen Signals. Die Signalamplitudeninformation von der Feldgeneratorspule LP und der Rückkopplungsspule LS erlauben es einem Verstärker mit variabler Verstärkung, die sich sonst ändernde Biegesignalamplitude zu korrigieren. Wichtig hierbei: Es kann nötig sein, zuerst das Rücckopplungsspulensignal zu linearisieren, bevor es zum Verstärker mit variabler Verstärkung weitergeleitet wird. Die dargestellten Komponenten/Funktionbausteine sind: ein Signalgenerator A7, ein Filter & Power Driver A8, en Filter & Gain A9 und ein variable Gain-Verstärker A10.

### Messung in der Differenz-Betriebsart

Zum Unterscheiden zwischen der interessierenden Biegekraft und anderen mechanischen Kräften (z.B. Drehmomenten) werden zwei Sensorelemente mit identischem Aussehen symmetrisch zu beiden Seiten des Testobjekts angeordnet. Durch Abziehen der gemessenen Signale voneinander heben sich die potentiell vorhandenen Drehmomente gegeneinander auf, und zurück bleiben die interessierenden Biegekräfte.

Die mathematische Verarbeitung der beiden Signale (eines von jedem einzelnen Sensorelement) kann auf verschiedene Weise erfolgen:
- Verbinden der Magnetfeldsensorspulen miteinander in umgekehrter Reihenfolge (Reihenverbindungen in der Weise, dass die gemessenen Signale voneinander abgezogen werden, ohne den Einsatz aktiver Elektronik).
- Einspeisen der einzelnen und verarbeiteten Messsignale in eine analog arbeitende Summierungsschaltung zum Abziehen der Signale voneinander.
- Verwendung eines digitalen Verarbeitungssystems (z.B. eines Mikroprozessors) zum Durchführen der mathematischen Signalverarbeitung. Dies ist die flexibelste Lösung.

Wichtig hierbei: Bei der Auswahl der zuerst vorgeschlagenen Lösung (Verbinden der passiven Magnetfeldsensorspulen in Reihe) muss sehr sorgfältig darauf geachtet werden, dass die Signalamplituden und gegeneinander bestehenden Signal-Offsets gut aufeinander abgestimmt sind. Sonst enthält das resultierende Signal Nebensprechen und ist dann (gegenüber dem interessierenden Ausgangssignal) verzerrt.

### Sensorausrichtung zum Testobjekt

Zwei grundlegend verschiedene Sensorbauarten liefern gute Messergebnisse, hier als "Design 1" und "Design 2" bezeichnet (wegen Ähnlichkeiten mit anderen Objekten bei Betrachtung der unten abgebildeten Schnittdarstellungen: "Glider" ("Segelflugzeug") und "Monkey" ("Affe")).

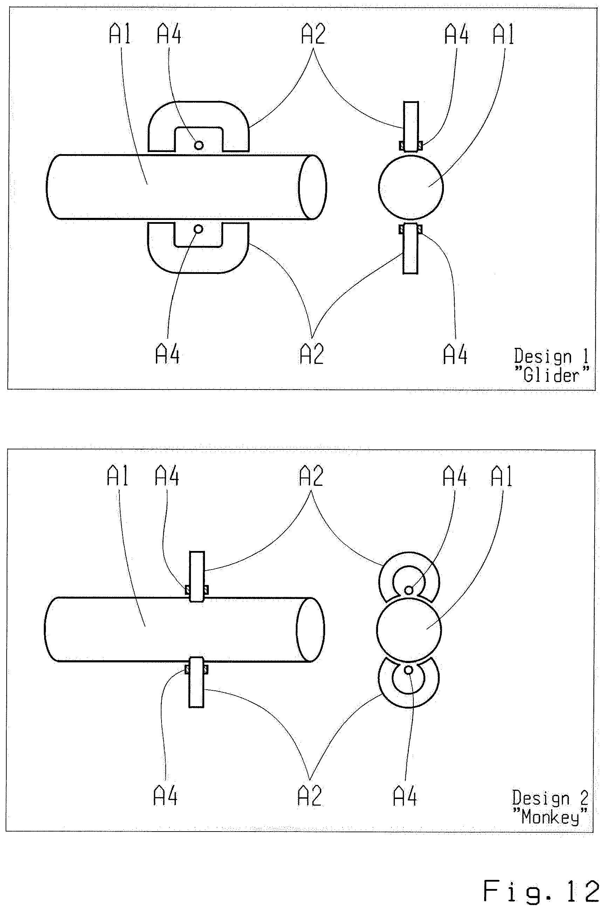

In Figur 12 ist folgendes dargestellt: Zwei der möglichen Sensorelementausrichtungen im Verhältnis zum Testobjekt. Die dunkel eingefärbten Teile symbolisieren die Magnetfeld-Sensorvorrichtung, die entweder ein Induktor mit Kern, ein Hall-Effekt-Sensor, MR, GMR oder eine beliebige andere Magnetfeldvorrichtung sein kann, die für den gewünschten Messbereich geeignet ist. Die Ausrichtung der Magnetfeld-Sensorvorrichtung im Verhältnis zu den Magnetfeldlinien (zwischen den beiden Polen des Flusskonzentrators) ist kritisch und ist in einem anderen Abschnitt der vorliegenden Beschreibung dargelegt.

### Was geschieht, wenn die Differenz-Betriebsart nicht genutzt wird?

Natürlich ist es auch möglich, eine einzige Sensorzelle zum Messen der gewünschten mechanischen Kräfte zu verwenden. Die Verwendung lediglich einer einzigen Sensorzelle verringert die Kosten noch weiter und macht den Sensor viel kleiner. Es wird dabei jedoch nicht mehr möglich sein, zwischen den angelegten Biegekräften und den potentiell vorliegenden anderen mechanischen Kräften, wie Drehmomenten und Biegungen in anderen Achsen, zu unterscheiden. Der Einsatz eines Aufbaus mit einer einzigen Sensorzelle bedeutet also, dass das Sensormodul mehrere unterschiedliche mechanische Kräfte gleichzeitig aufnimmt, ohne dass es dabei möglich ist, zwischen ihnen zu unterscheiden.

Die einzige Weise, in der der eine einzige Zelle aufweisende aktive Biegesensor angemessen verwendet werden kann, besteht darin, dass das Testobjekt so aufgebaut und an seinem Einsatzort angebracht ist, dass NUR die gewünschten Kräfte durch es hindurch wirksam werden. Das bedeutet also, dass dann keine störenden mechanischen Kräfte, wie zum Beispiel Drehmomente, vorhanden sind.

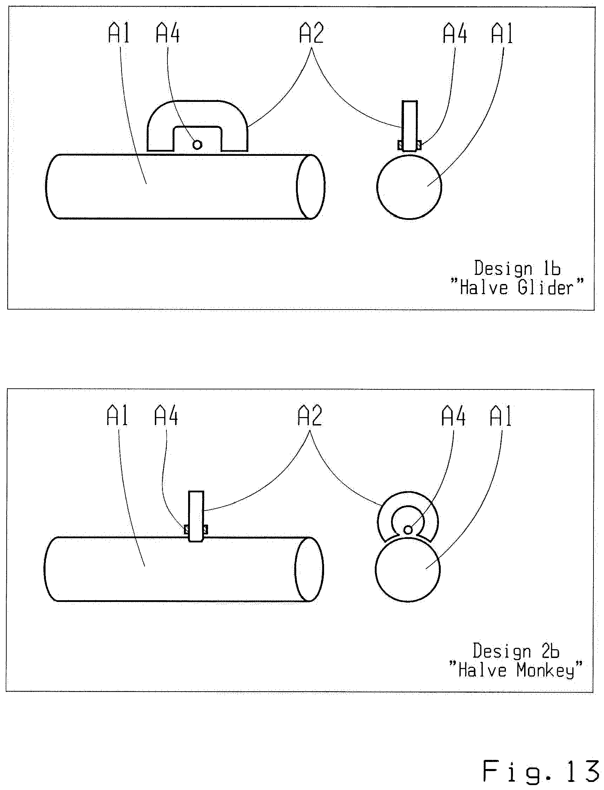

In Figur 13 ist Folgendes dargestellt: Die Verwendung von lediglich einem Sensorelement ist nur dann empfehlenswert, wenn außer den interessierenden Biegekräften keine sonstigen mechanischen Kräfte an das Testobjekt angelegt werden. Ansonsten wird es sich bei dem Ausgangssignal des aktiven Biegesensorelements um eine Kombination bzw. einer Mischung der interessierenden und der störenden mechanischen Kräfte handeln.

### Testobjektmaterial

Eingangs wurde angenommen, dass das Testobjektmaterial einer ähnlichen Qualität und Leistung (hinsichtlich der magnetischen Eigenschaften) sein soll, wie sie nötig sind, wenn Biegesensoren gebaut werden, die auf dem Magnetostriktionsprinzip beruhen. Diese ferromagnetischen Werkstoffe sind geringfügig teurer als "normale" Stähle, da sie Nickel, Chrom oder ähnliche Elemente entweder allein oder in Kombination enthalten müssen.

Die Testergebnisse (beim Konzipieren und Aufbauen eines aktiven Biegesensors) haben gezeigt, dass eine viel größere Auswahl an Metallmaterialien verwendet werden kann, als zu erwarten war. Solange sich ein Permanentmagnet an einem Testobjekt halten kann, wird auch der aktive Biegesensor funktionieren. Zum Erreichen der bestmöglichen Messsignalqualität ist es empfehlenswert, das Testobjektmaterial wenigstens im Sensorbereich zu härten. Der "Sensorbereich" ist der Ort, an dem der aktive Biegesensor angeordnet wird. Wenn dies unterbleibt, führt das zu einer relativ großen Messhysterese.

### Im Testobjekt bleibende Magnetfelder

### Mit Gleichspannung (statisches Feld) betriebener Biegesensor:

Bei der Verwendung von Testobjektmaterialien, die ferromagnetische Eigenschaften haben und permanent magnetisiert werden können, sollte dieses Material bei einem mit Gleichspannung betriebenen aktiven Biegesensor NICHT verwendet werden. Der Grund hierfür liegt darin, dass dieses Material an der Stelle, an der der aktive Biegesensor angeordnet ist, langsam aber sicher zu einem Stabmagnet wird (das bedeutet, dass der Ort, an dem der aktive Biegesensor angeordnet ist, nach einer bestimmten Zeit selbst zum Magnet wird. "Eine bestimmte Zeit" bedeutet hier nach ein paar Sekunden oder nach ein paar Minuten).

Wenn dies geschieht, driftet der Signaloffset des Biegesensor-Ausgangssignals in eine Richtung und ist dann nicht stabil. Umgekehrt ist es daher nur logisch, dass ein mit Gleichspannung betriebener Biegesensor gegenüber Magnetfeldern, die unter der Oberfläche des Testobjekts gespeichert sind, SEHR empfindlich ist. Vor dem Einsatz muss das Material des Testobjekts daher zuerst entmagnetisiert werden.

### Dynamisch (mit Wechselspannung) betriebener Biegesensor:

Wenn der aktive Biegesensor in einer Wechselspannungsbetriebsart betrieben wird (die Feldgeneratorspule von einem symmetrischen Wechselstrom mit einer bestimmten Frequenz angesteuert wird) UND wenn standardmäßige Induktoren mit ferromagnetischem Kern verwendet werden, dann ist die Konstruktion des aktiven Biegesensors in den meisten Fällen gegenüber in dem Testobjekt gespeicherten Magnetfeldern UNEMPFINDLICH.

"In den meisten Fällen" bedeutet, dass Fälle möglich sind, in denen der mit Wechselspannung betriebene aktive Biegesensor gegenüber Magnetfeldern empfindlich ist, die unter der Oberfläche des Testobjekts gespeichert sind. Wenn zum Beispiel angenommen wird, dass in dem Testobjekt EIN magnetischer Punkt (im Sensorbereich) gespeichert ist, und wenn weiter angenommen wird, dass ZWEI Sensorspulen symmetrisch um die Welle herum angeordnet sind, dann wird das von diesem magnetischen Punkt erzeugte Signal (bei einer Drehzahl von 300 Umdrehungen pro Sekunde (äquivalent zu 18.000 min⁻¹)) die interne Signaldekodierungsfunktion des Sensorsystems stören.

### Sensorelektronik

### Anordnung der Sensorspule (MFS)

Die Ausrichtung der Sensorspule (hinsichtlich der Magnetfeldlinien, die von der Generatorspule und dem Flusskonzentrator erzeugt werden) entscheidet, WELCHE mechanische Kraft erfasst und gemessen wird und WIE groß die Amplitude des Messsignals sein wird (Signalqualität).

### Anwendungsgebiete

Bei herkömmlichen Biegesensortechniken war es nötig, dass das Sensorelement fest auf der Testobjektoberfläche befestigt war, um sicherzustellen, dass die interessierenden mechanischen Kräfte tatsächlich durch es hindurch wirken, um sie zu messen. Die benötigten Kabelverbindungen (zum Sensorelement hin und von diesem weg), die Umgebungseinschränkungen (Feuchtigkeit und zyklisch schwankende Temperaturen begrenzen die Lebensdauer des Sensorelements) und die mit diesen Sensortechniken verbundenen Kosten schränken ihren Gebrauch ein und machen ihn für Massenanwendungen unbrauchbar.

Der aktive Biegesensor überwindet alle diese Probleme und kann daher auf vielen verschiedenen Gebieten zum Einsatz kommen: Automobilindustrie, Avionik, Fertigungstechnik, Konsumgüter, Mess- und Regelungstechnik, wie:
- Diagnose und Vorsorge an großen Bauten (Brücken, Hochhäusern, ...)
- Echtzeitmessungen in Automobil- / LKW-Radaufhängungen für aktive Radaufhängung oder aktive Stabilitätskontrolle.
- Avionik: Flügelbelastungen in Schlechtwettersituationen; Diagnose an der Rahmenstruktur.
- Heimwerker- und professionelle Werkzeuge: Konstruktion von Drehmomentschlüsseln (durch Biegekräfte); und Werkzeugüberlastungserkennung.
- Windkraft: Turbinenstruktur und Propellerstruktur bei Orkanböen.
- Industrielle Pressanlagen, wie Papiermühlen, Stahlproduktion und Werkzeugausrüstung (Erfassung von Kräftegrenzen zur Vermeidung von Schäden an Werkzeugen und Werkstoffen).

### Funktionsprinzipien

Eine Generatorspule wird entweder von einem Gleich- oder einem spezifischen Wechselspannungssignal angesteuert, und erzeugt damit einen Magnetfluss unter der Oberfläche des Testobjekts. Die mechanischen Kräfte, die durch das Testobjekt hindurchgehen, beeinflussen die Richtung der Magnetfeldlinien in ihrem Verlauf von dem einen zum anderen Pol des Flusskonzentrators. Die Änderung der Verlaufsrichtung der Magnetfeldlinien kann von einer Magnetfeld-Sensorvorrichtung erfasst werden, die an der Oberfläche des Testobjekts angeordnet ist. Die von der Magnetfeld-Sensorvorrichtung aufgenommenen Signaländerungen sind proportional zu den interessierenden mechanischen Kräften, die an das Testobjekt anliegen.

Bei der Verwendung einer elektrischen Gleichspannung zum Ansteuern der Feldgeneratorspule besteht die Gefahr, dass ein kleiner Abschnitt des Testobjekts (in Abhängigkeit von dem Werkstoff) permanent magnetisiert wird. Dies führt dann zu einem Signaloffset, der wie ein reales durch mechanische Kräfte verursachtes Signal aussehen kann. Dieses Problem kann dadurch umgangen werden, dass ein elektrisches Wechselspannungs-Ansteuerungssignal zum Betreiben des Feldgenerators eingesetzt wird.

Es sind jedoch nur spezifische Frequenzen zum Erfassen und Messen mechanischer Kräfte am Testobjekt geeignet.

### Physische Abmessungen des Sensors

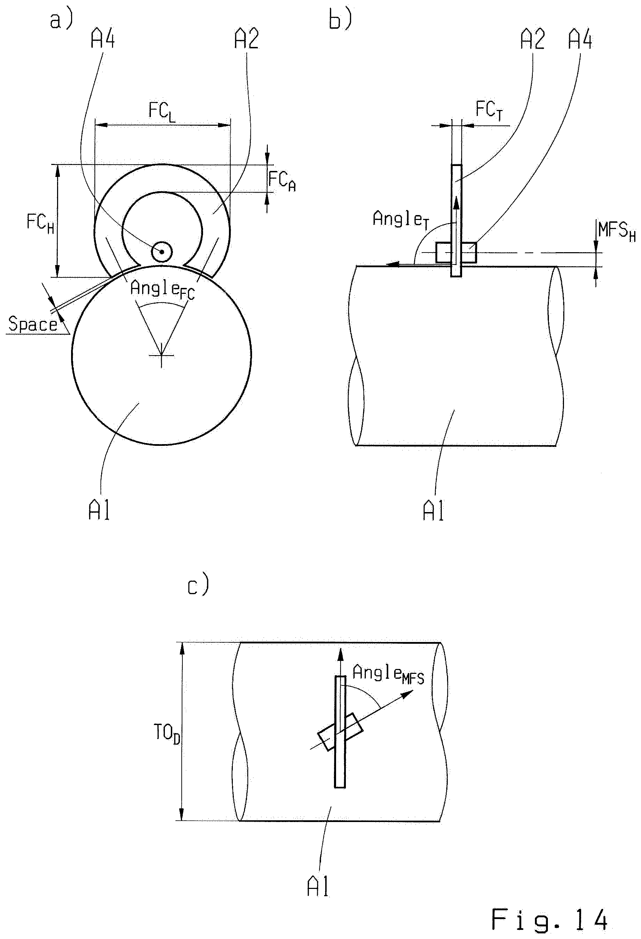

In Figur 14 ist Folgendes in einer Seitenansicht 14a und zwei Vorderansichten 14b und 14c dargestellt: Der Winkel_{MPS} (Angle_{MPS}) entscheidet, WELCHE mechanische Kraft gemessen wird und was die Qualität des Messsignals sein wird. Dieser Winkel entscheidet auch über potentielles "Nebensprechen" in dem Messsignal, das von den verschiedenen mechanischen Kräften verursacht werden kann, die eventuell an dem Testobjekt anliegen.

### Forschungs- und Entwicklungsprojekt: aktiver Sensor für mechanische (Biege-) Kräfte

Einer der Hauptunterschiede zwischen einem passiven und einem aktiven Sensor für mechanische Kräfte besteht darin, dass keine "permanente" Magnetisierung des Testobjekts nötig ist, um einen funktionierenden Sensor zu bekommen. Ein aktiver Sensor für mechanische (Biege-) Kräfte kann unmittelbar nach geeigneter Anordnung der Sensorhardware in nächster Nähe zum Testobjekt in Betrieb genommen werden.

Die folgende Aufgabenlistenbeschreibung konzentriert sich auf eine oder zwei der "wahrscheinlichsten" Bauarten eines aktiven Sensors für mechanische (Biege-) Kräfte, die die gewünschte Sensorleistung erbringen. Die zwei physischen Hardwareimplementierungen für den Sensor, die bisher die besten Ergebnisse erbrachten, werden hier als Glider (Segelflugzeug) und Monkey (Affe) bezeichnet. Erste Ergebnisse lassen erkennen, dass "Monkey" geringfügig bessere Ergebnisse erzielt als "Glider". "Glider" ist in der Herstellung jedoch etwas einfacher.

### Aktiver Sensor für mechanische (Biege-) Kräfte

### Definitionen

Das aktive Sensorsystem besteht aus mehreren Modulen:
- Sensorhardware (Flusskonzentrator, Generatorspule, Rückkopplungsspule, MFS-Spule)
- Elektronische Schaltung
- 6-adriges Verbindungskabel zwischen Sensorhardware und Elektronik
- elektrische Stromversorgung
- 2-adriges Verbindungskabel zwischen Elektronik und Stromversorgung

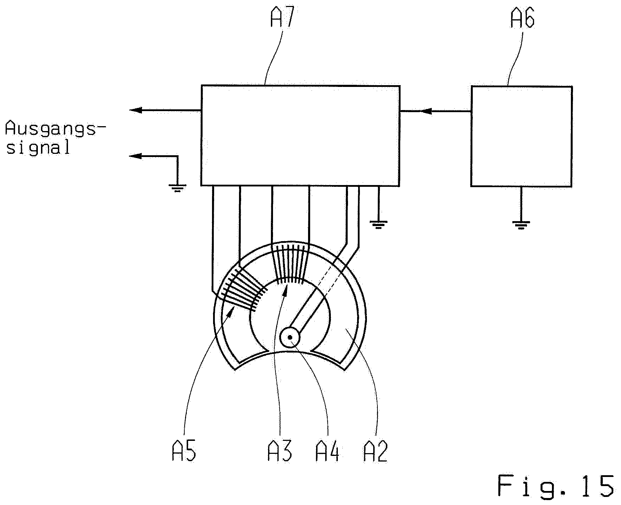

Dies ist schematisch in Figur 15 dargestellt.

Die Sensorhardware wird seitlich nahe an des Testobjekt (z.B. Antriebswelle) herangebracht.

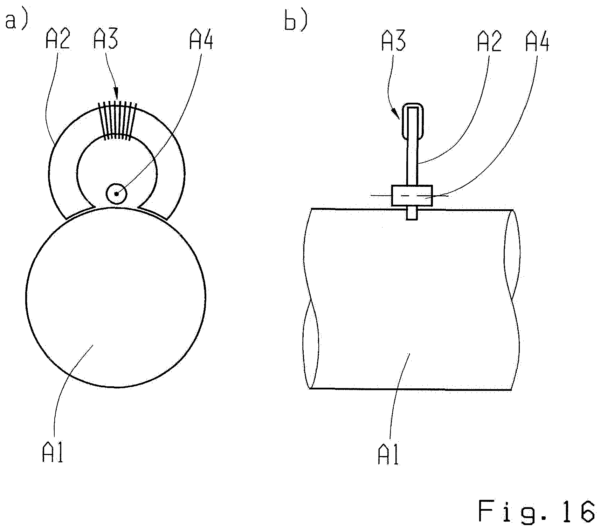

Die ist schematisch in Figur 16 dargestellt, wobei Figur 16a eine Seitenansicht und Figur 16b eine Vorderansicht zeigt.

Zuerst wurden 40 verschiedene Sensorbauarten definiert, und fast die Hälfte davon wurde getestet. Die Bauart Nr. 27 zeigte die ersten brauchbaren Testergebnisse. Die Zeichnung oben zeigt Bauart Nr. 27 mit beträchtlichen Verbesserungen.

### Zielkennwerte zum Erfüllen aktueller Anforderungen des Marktes

Da es sich hier um eine gänzliche neue Sensortechnik handelt, fällt es schwer zu definieren, welche die Zielkennwerte sein sollen. Prinzipiell werden die Zielkennwerte durch die Anwendung definiert, in der der Sensor zum Einsatz kommt. Ausgehend von Marktkenntnissen, die über die letzten 10 Jahre erworben wurden, kann jedoch eine Annahme darüber gemacht werden, welches die "Minimal"-Anforderungen sein werden, mit denen der aktive Biegesensor auf dem Markt voraussichtlich erfolgreich sein wird. Außerdem kann auch definiert werden, wie eine "durchschnittliche" Spezifikation wohl aussehen wird, die hier als "Standard" bezeichnet wird, und wie eine "hervorragende" Leistung eines aktiven Biegesensors wohl ausfallen würde.

| | | **Minimal** | **Standard** | **Hervorragend** | |
|---|---|---|---|---|---|
| **Spezifikation** | **Erläuterung** | **typisch** | **typisch** | **typisch** | **Einheit** |
| kleinster verwendbarer Wellendurchmesser | | 20 | 12 | 10 | mm |
| größter verwendbarer Wellendurchmesser | | 50 | 100 | unbegrenzt | mm |
| Signalauflösung | digitales Äquivalent | 8 | 10 | 12 | Bit |
| Wiederholbarkeit | Prozent der Vollaussteuerung | +/- 1 | +/- 0,5 | +/-0,1 | %VA |
| Signal bandbreite | analog Hz | 100 | 1.000 | 10.000 | Hz |
| Signalhysterese | bei Einsatz ferromagnetischen Materials | +/- 2 | +/-0,5 | +/-0,2 | % VA |
| Ausgangssignalbereich | maximales negatives bis maximales positives Drehmoment | 1,5 | 2 | 4 | V |
| Signal-Rausch-Verhältnis | | 10 | 5 | < 2,5 | mV |
| Luftspaltvariation | Variation des Abstands zwischen Sensor und Welle | keine | 1,5 | 4 | mm |
| Sensorhardwarehöhe | für 25 mm dicke Welle benötigter radialer Abstand | 25 | 20 | < 15 | mm |
| Stromverbrauch | | < 250 | < 125 | < 75 | mA |
| Betriebstemperaturbereich | nur Sensorhardware | 0 bis +70 | -20 bis +85 | -40 bis +150 | °C |

### Dimensionierung des aktiven Biegesensors

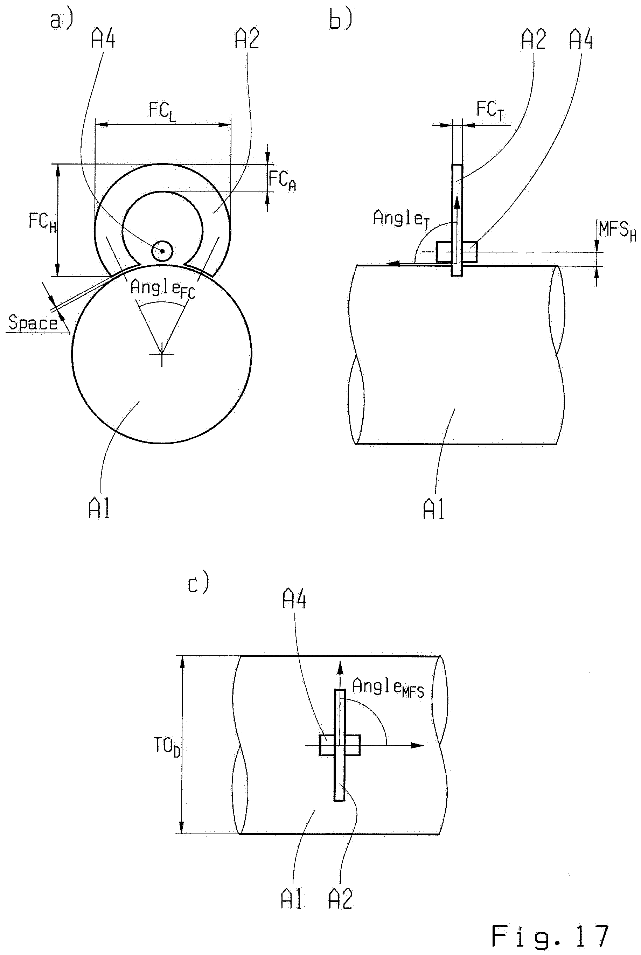

Zum Unterstützen der technischen "Kommunikation" beim Berichten und Dokumentieren der Abmessungen einer aktiven Biegesensorhardware wurden die folgenden Abmessungsparameter festgelegt:
Die jeweiligen Parameter der untenstehenden Tabelle sind zusätzlich in Figur 17 zugeordnet, wobei Figur 17a eine Seitenansicht und Figur 17b sowie Figur 17c eine Vorderansicht darstellt.

Die unten angegebenen Kennwerte sind lediglich Beispiele für ein spezifisches aktives Sensormodell (aus den 4 oder 5, die bisher hergestellt wurden). Diese Spezifikationen müssen noch optimiert und ihre Auswirkungen hinsichtlich der Sensorleistung noch besser verstanden werden.

| **Spezifikation** | **Symbole** | **Erläuterungen** | **Min** | **Typ.** | **Max** | **Einheit** |
|---|---|---|---|---|---|---|
| Flusskonzentratorlänge | FC L | | | 22 | | mm |
| Flusskonzentratorhöhe | FC H | | | 20 | | mm |
| Flusskonzentratordicke | FC T | | | 4 | | mm |
| Flusskonzentratorringbreite | FC A | | | 2,5 | | mm |
| Flusskonzentratorneigung | Winkel T | | - 1 | | + 1 | Grad |
| Flusskonzentrator-Polwinkel | Winkel FC | | | 60 | | Grad |
| Winkel MFS-Achse zu Generatorfeldachse | Winkel MFS | | | 88 | | Grad |
| Flusskonzentratormaterial | | | | Stahlscheiben | | |
| Anzahl im Flusskonzentrator verwendeter Metallelemente | | | 1 | 3 | | |
| Abstand zw. Polen des Flusskonzentrators und dem Testobjekt | Abstand | | 0,1 | | 1,1 | mm |
| Entfernung zw. Mitte MFS-Spule und Testobjekt | MFS H | | | 2 | | mm |
| Testobjektdurchmesser | TO D | | | 15 | | mm |
| | | | | | | |
| Anzahl Windungen der Generatorspule | | | | 100 | | Windungen |
| Spulendrahtdicke | | | | 0,28 | | mm |
| Axiale Spulenlänge auf Flusskonzentrator | | | | 10 | | mm |
| Ort bezüglich Flusskonzentrator | | | | Mitte | | |
| | | | | | | |
| spezifizierte MFS-Spulen-Windungen | | | | 400 | | Windungen |
| MFS-Spulen-Drahtdicke | | | | 80 | | µm |
| Spulenkörperlänge | | | | 6 | | mm |
| MFS-Spulen-Körperdurchmesser | | | | 2 | | mm |
| MFS-Spulen-Widerstand | | Gleichstrom | | 10 | | Ohm |
| MFS-Spulen-Hersteller | | | | KUK | | |

### Durchmesser des Testobjekts (Beispiel: Antriebswelle)

Der Durchmesser des Testobjekts (bzw. der Antriebswelle) definiert (neben noch ein paar weiteren Parametern) die auf die Biegekräfte bezogene Signalverstärkung. Je größer der Durchmesser der Welle ist, desto kleiner wird die Signalverstärkung (in Bezug auf eine konstante an die Welle angelegte Biegekraft).

Hinweis: Die Signalverstärkung des aktiven Biegesensors wird von einer Anzahl spezifischer Kennwerte festgelegt. Bei dem Versuch, das Verhalten des Sensors zu prüfen, wenn der Durchmesser (oder die Querschnittsfläche) geändert wird, müssen alle anderen Sensorparameter konstant gehalten werden, wie:
- identisches Wellenmaterial
- identisches Härtungs- und Glühverfahren
- Abstand / Spalt zwischen Testobjekt und Sensorhardware
- von der Sensorhardware erzeugte magnetische Flussdichte
   - Induktivität und Treiberschaltung
- Sensorhardware-Abmessungen
   - Oberflächengröße der beiden Magnetpole
   - **Angepasst:** der in die Pole geschnittene Radius zur Anpassung an den Wellendurchmesser A11

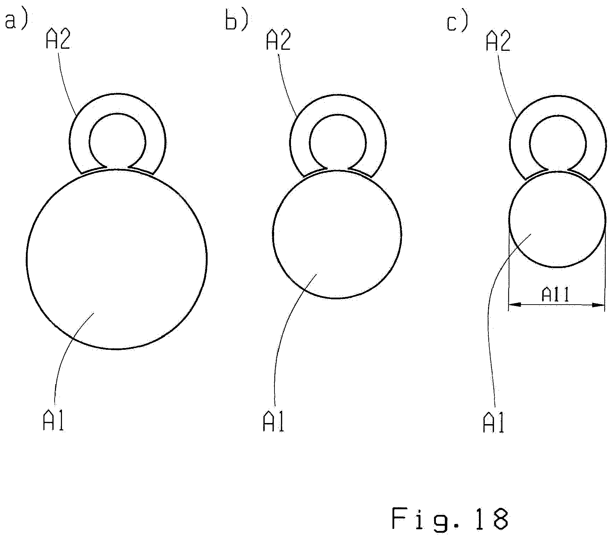

In Figur 18 ist Folgendes in Seitenansichten 18a, 18b und 18c dargestellt: Ein- und dieselbe Bauart der Sensorhardware wird zur Durchführung dieses Tests verwendet. Die zwei Magnetpoloberflächen, die zum Testobjekt hin zeigen, müssen jedoch für jeden Wellendurchmesser eigens angepasst werden. Entscheidend ist, dass der "Spalt" (Abstand) zwischen den Magnetpolen konstant gehalten wird, um für die MFS-Spule den gleichen "Platz" zu lassen.

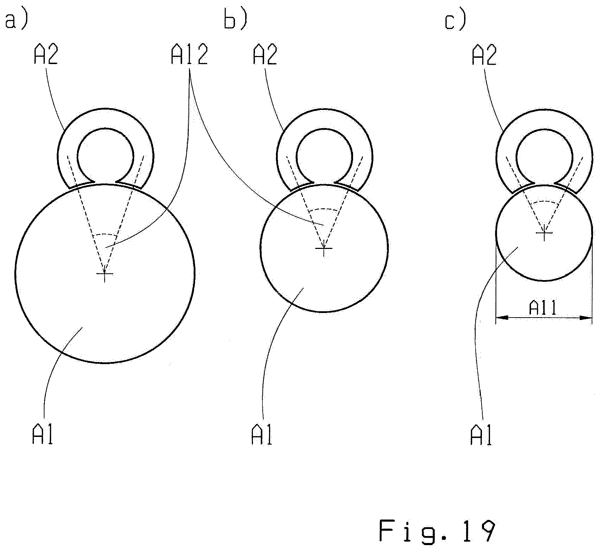

Höchstwahrscheinlich wird die Signalverstärkung des Biegesensors auch von dem Bogenkennwert der Sensorhardware definiert. Bogenkennwert bedeutet hier: "Der Winkel, über den die Sensorhardware das Testobjekt abdeckt", siehe Figur 19 mit Seitenansichten 19a, 19b und 19c.

Der Winkel des Sensorbogens A 12 unterscheidet sich in allen drei oben dargestellten Beispielen. Es gibt zwei widerstreitende Annahmen, die beide bestehen und sich zu einem gewissen Grad gegenseitg kompensieren können:
- Je größer der Bogenwinkel, desto größer die Signalverstärkung
   - Mit einem größeren Bogenwinkel wird eine größere Fläche der Sensoroberfläche überdeckt und wird es leichter, die Unterdrehmomente zu erfassen, die das Magnetsignal verzerren.
- Je näher die Magnetpole einer Lage an entgegengesetzten Seiten der Welle kommen, desto kleiner wird das Sensorsignal.
   - In diesem Fall (wenn die Pole an entgegengesetzten Seiten der Welle angeordnet werden) geht das Magnetfeld zu fast 100% direkt durch das Wellenmaterial und zeigt keine Auswirkungen auf der Wellenoberfläche (an der dann die Sensorspule angeordnet ist).

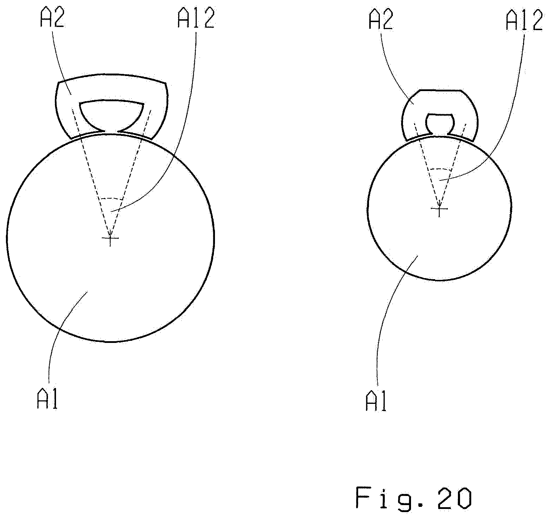

In der Figur 20 ändert sich der Wellendurchmesser und wurde der Winkel A 12 des Bogens (Sensorhardware) konstant gehalten. Dies bedeutet, dass sich die Bauart der Sensorhardware für jeden Wellendurchmesser wesentlich ändert.

### Abstand zwischen Welle und Sensor

Es gibt mehrere Konstruktionsmöglichkeiten, die getestet wurden, um die Signalverstärkungsänderungen automatisch zu kompensieren, wenn sich der Abstand zwischen Sensor und Wellenoberfläche ändert. Die einfachste konstruktive Möglichkeit ist die Verwendung einer Rückkopplungsspule.

### Aufbau der Rückkopplungsspule:

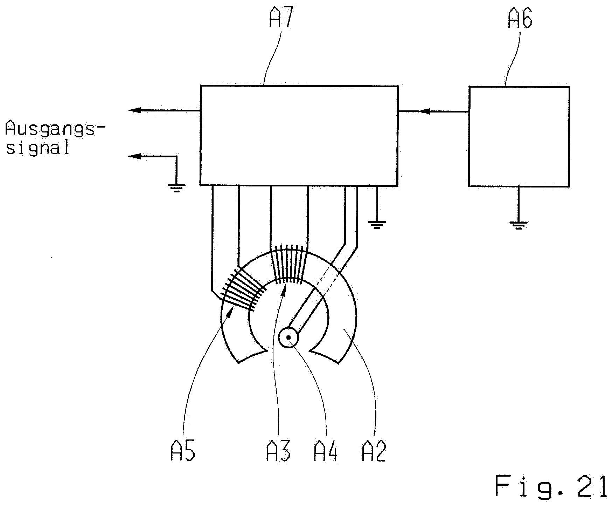

In Figur 21 ist Folgendes dargestellt: Die Rückkopplungsspule A5 liefert genaue Informationen über die Effizienz des Sensors, bzw. wenn sich der Abstand zwischen Sensorhardware und Wellenoberfläche ändert.

### Flusskonzentratormaterial

Bisher wurden bei allen Tests, die an aktiven Biegesensoren durchgeführt wurden, "standardmäßige" Scheiben und Klemmringe als Flusskonzentrator verwendet. Der Begriff "standardmäßig" bedeutet hier, dass eine große Auswahl verfügbarer Scheiben über professionelle Zulieferwege (Hoffman Tools) und Verbrauchermärkte (Obi in Deutschland) zugekauft und für den Aufbau des Sensors verwendet wurden.

Das einzige Kriterium, das für die Entscheidung darüber herangezogen wurde, "welches Scheiben- oder Klemmringmaterial verwendet werden kann", war, dass das Material gegenüber einem in seiner Nähe gehaltenen Permanentmagneten eine starke Reaktion zeigt. Es wurden bisher noch keine Tests geplant oder durchgeführt, um festzustellen, welche Sensorleistungsunterschiede erzielt werden können, wenn ein höherwertiges Material, wie zum Beispiel Transformatorstahl, verwendet wird.

Die Gründe, dass keine eigene Optimierung des Flusskonzentratormaterials verfolgt wurde, sind die Folgenden:
- Die Sensorleistung wird stark von anderen Faktoren beeinflusst, auf denen zunächst das Augenmerk lag.
- Die Scheiben und Klemmringe haben eine perfekte Bauform, die die anfängliche Sensorkonstruktion vereinfachte und Zeit sparte. Die Scheiben sind perfekt symmetrisch und in fast allen gewünschten Größen und Dicken erhältlich.
- Sehr geringe Kosten und große Verfügbarkeit.

Mindestens fünf verschiedene Scheiben- und Klemmringtypen wurden bisher verwendet, die sich in der Art des Materials (z.B. gehärteter Federstahl, nicht gehärtete Scheiben), Beschichtung (keine, Chrom, Zink ...) unterschieden. Sie zeigten alle eine gute Leistung. Zum Bestimmen, welches Material die besten Ergebnisse erzielt und "worin die Leistungsunterschiede bestehen", wird es nötig sein, "identisch" abgemessene und "identisch" geformte Flusskonzentratoren zu kaufen oder selbst herzustellen, so dass die Testergebnisse miteinander verglichen werden können.

**Zusammenfassung:** Offensichtlich wird die Wahl des Flusskonzentratormaterials die Sensorleistung beeinflussen. Da der aktive Biegesensor in einer Gleichspannungs-Betriebsart oder einer Wechselspannungsbetriebsart betrieben werden kann, gibt es auch verschiedene Materialkennwertanforderungen für jede dieser zwei Betriebsarten. Wenn das gewählte Material eine hohe Remanenz hat, dann ist es für den Gleichspannungsbetrieb NICHT geeignet, da der Flusskonzentrator, nachdem er permanent magnetisiert wurde, eine andere Reaktion zeigt als davor. Es ist davon auszugehen, dass Transformatorstahl eine gute Wahl des Werkstoffs sein wird. Er ist ebenfalls allseits verfügbar, jedoch teuer.

### Testobjektmaterial

Anfänglich wurde angenommen, dass das Testobjektmaterial ähnlicher Qualität und ähnlichen Verhaltens (hinsichtlich der magnetischen Eigenschaften) sein muss, wie sie nötig sind, wenn Magnetostriktions-Biegesensoren gebaut werden. Diese ferromagnetischen Werkstoffe sind geringfügig teurer als "normale" Stähle, da sie Nickel, Chrom oder ähnliche Elemente allein oder in Kombination enthalten müssen.

Überraschenderweise haben die Ergebnisse gezeigt, dass eine viel größere Auswahl an metallischen Werkstoffen verwendet werden kann, als ursprünglich angenommen. Solange ein Permanentmagnet an einem Testobjekt fest hält, funktioniert auch der aktive Biegesensor.

### Im Testobjekt bleibende Magnetfelder

### Mit Gleichspannung (statischem Feld) betriebener aktiver Sensor:

Bei der Verwendung von Testobjektmaterialien, die ferromagnetische Eigenschaften haben und permanent magnetisiert werden können, sollten diese Materialien bei einem mit Gleichspannung betriebenen aktiven Biegesensor NICHT verwendet werden. Der Grund dafür liegt darin, dass dieses Material an der Stelle, an der der aktive Biegesensor angeordnet ist, langsam aber sicher zu einem Stabmagnet wird (das bedeutet, dass der Ort, an dem der aktive Biegesensor angeordnet ist, nach einer bestimmten Zeit selbst zum Magnet wird. "Eine bestimmte Zeit" bedeutet hier nach ein paar Sekunden oder nach ein paar Minuten).

Wenn dies geschieht, driftet der Signaloffset des Biegesensors in eine Richtung und ist dann nicht stabil. Umgekehrt ist daher nur logisch, dass ein mit Gleichspannung betriebener aktiver Biegesensor gegenüber Magnetfeldern, die unter der Oberfläche des Testobjekts gespeichert sind, SEHR empfindlich ist. Vor dem Gebrauch muss das Material des Testobjekts daher zuerst entmagnetisiert werden.

### Dynamisch (mit Wechselspannung) betriebener aktiver Sensor:

Wenn der aktive Biegesensor in einer Wechselspannungsbetriebsart betrieben wird (die Feldgeneratorspule von einem symmetrischen Wechselstrom mit einer bestimmten Frequenz angesteuert wird) UND wenn standardmäßige Induktoren mit ferromagnetischem Kern verwendet werden, dann ist die Konstruktion des aktiven Biegesensors in den meisten Fällen gegenüber in dem Testobjekt gespeicherten Magnetfeldern UNEMPFINDLICH.

"In den meisten Fällen" bedeutet, dass Fälle möglich sind, in denen der mit Wechselspannung betriebene aktive Biegesensor gegenüber Magnetfeldern empfindlich ist, die unter der Oberfläche des Testobjekts gespeichert sind. Wenn zum Beispiel angenommen wird, dass in dem Testobjekt EIN magnetischer Punkt (im Sensorbereich) gespeichert ist, und wenn weiter angenommen wird, dass ZWEI Sensorspulen symmetrisch um die Welle herum angeordnet sind, dann wird das von diesem magnetischen Punkt erzeugte Signal (bei einer Drehzahl von 300 Umdrehungen pro Sekunde (äquivalent zu 18.000 min⁻¹)) die interne Signaldekodierungsfunktion des Sensorsystems stören.

### Neigung des Flusskonzentrators

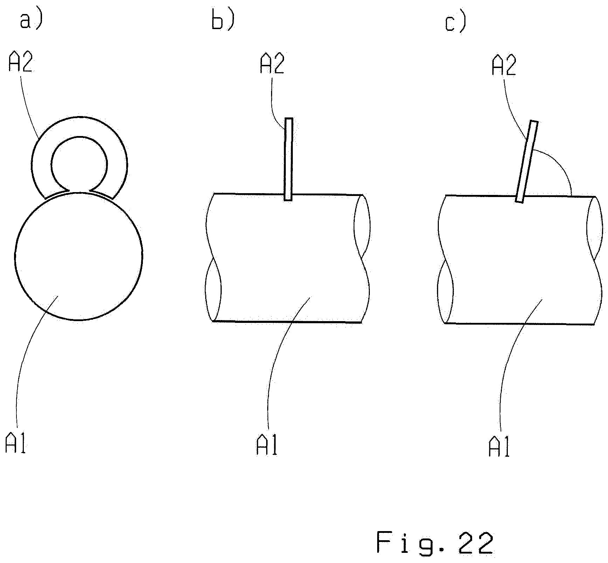

Höchstwahrscheinlich wird ein Neigen des Flusskonzentrators zu einer Verringerung der Signalverstärkung führen, siehe Figur 22, mit Seitenansicht 22a und Vorderansichten 22b und 22c, wobei in Ansicht 22c der Magnetflusskonzentrator A2 geneigt ist.

### Materialdicke des Flusskonzentrators

Die Dicke der Flusskonzentratorsvorrichtung definiert die Präzision einer spezifischen mechanischen Kraft, die gezielt identifiziert und gemessen werden kann. Es ist wichtig, dass die erzeugten Magnetfeldlinien durch die Oberfläche des Testobjekts geleitet werden, um eine ausreichende von der Magnetfeld-Sensorvorrichtung erzeugte Signalamplitude zu gewährleisten. Wenn der Flusskonzentrator zu dünn gemacht wird, dann erzeugt das von der Feldgeneratorspule erzeugte Feld unerwünschte magnetische Streufelder.

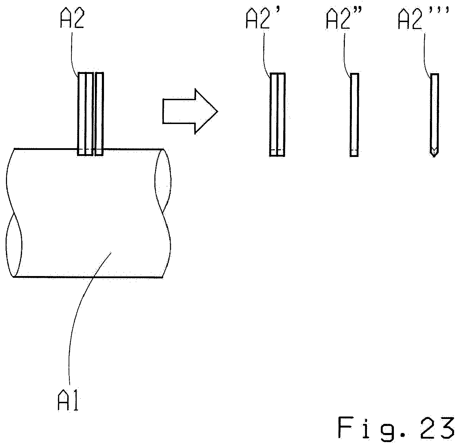

Der Magnetflusskonzentrator A2 und alternative Ausgestaltungen A2', A2" und A2'" sind in Figur 23 dargestellt.

Es muss noch getestet und evaluiert werden, wie sich die Sensorleistung ändert, wenn die Flusskonzentratordicke verringert wird oder wie sich die Form der vorderen Teile (der beiden Pole) auswirkt. Um die Poloberfläche sehr schlank zu machen, kann das Polende "angespitzt" werden. Der potentielle Vorteil hierbei ist, dass eine solche Bauart gegenüber einer Neigung des Flusskonzentrators weniger empfindlich ist.

### Flusskonzentratorprofil

Eine mechanische Bauart mit "niedrigem Profil" wird für die meisten Anwendungen bevorzugt. Es muss jedoch große Sorgfalt darauf verwendet werden, dass am Flusskonzentrator keine scharfen "Ecken" übrig bleiben, da das Magnetfeld dann dort austritt und unerwünschte Streufelder erzeugt.

Außerdem ist es wichtig sicherzustellen, dass am oberen Ende der Flusskonzentrator der Oberfläche des Testobjekts nicht zu nahekommt, da sonst dieser Teil des Flusskonzentrators das Messsignal stört (das Magnetsignal "stiehlt", das von der MFS-Vorrichtung erfasst und aufgefangen werden sollte).

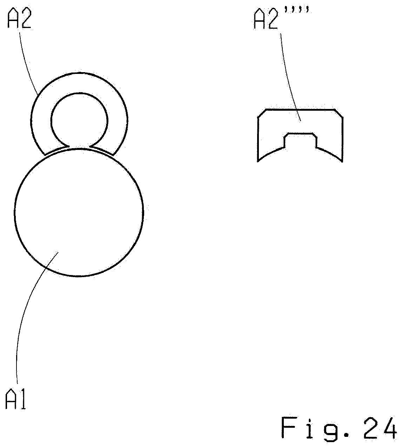

In Figur 24 ist Folgendes in einer Seitenansicht dargestellt: Es ist wichtig, den radialen Raum, der von dem aktiven Drehmomentsensor benötigt wird, so gering wie möglich zu halten, um diesen Sensor in kleinen Bauräumen unterzubringen. Durch Verringern der radialen Abmessungen kommt die Generatorspule jedoch näher an die Sensorspule und auch näher an die Testoberfläche heran, was dazu führen kann, dass die sonst erreichbare Sensorleistung gestört wird. Dargestellt sind ein Magnetflusskonzentrator A2 und eine weitere alternative Bauform A2"".

### Bezugszeichen

- 1: Fahrwerkskomponente
- 1a: Messeinrichtung
- 1 b: metallischer, magnetischer Teilbereich
- 1c: Verbindungsstrebe
- 1d: Kugellager
- 1e: Kugellager
- 1f: Schweißnaht
- 2: Gehäuse
- 2a: obere Gehäusehälfte
- 2b: untere Gehäusehälfte
- 2c: Vergussmasse
- 2d: Vorsprung
- 3: Felderzeugungsmittel
- 3a: erstes Felderzeugungsmittel
- 3aa: Feldkonzentrator
- 3b: zweites Felderzeugungsmittel
- 3ba: Feldkonzentrator
- 4: Kabel
- 5: Detektionsmittel
- 5a: erstes Detektionsmittel
- 5b: zweites Detektionsmittel
- 6a: Aussparung
- 6b: Befestigungsmittel
- 6c: Befestigungsstruktur
- 7: elektronische Mittel
- x: Abstand
- M: Mittelebene
- NF: neutrale Faser
- A1: Testobjekt
- A2: Magnetflusskonzentrator
- A3: Magnetfeld-Generator-Spule
- A4: Magnet-Sensorelement
- A5: Signalrückkopplungsspule
- A6: Stromversorgung
- A7: Signalgenerator
- A8: Filter & Power Driver
- A9: Filter & Gain
- A10: variabler Gain-Verstärker
- A11: Wellendurchmesser
- A12: Winkel des Sensorbogens

## Patentansprüche

1. Komponente (1) einer Vorrichtung, welche Komponente eine Messeinrichtung (1a) zum Messen von Kräften und zumindest einen metallischen, magnetischen Teilbereich (1b) aufweist, wobei die Messeinrichtung (1a) mindestens ein Felderzeugungsmittel (3; 3a, b) zum Erzeugen eines elektromagnetischen Wechselfeldes und mindestens ein Detektionsmittel (5; 5a, b) zum Detektieren von Änderungen des erzeugten Magnetfeldes umfasst, welches Felderzeugungsmittel (3; 3a, b) und welches Detektionsmittel (5; 5a, b) derart an dem metallischen, magnetischen Teilbereich (1b) der Komponente (1) angeordnet und mit diesem zusammenwirkend ausgebildet sind, dass mittels der Messeinrichtung (1) abhängig von Messsignalen des Detektionsmittels (5; 5a, b) auf die Komponente (1) einwirkende Kräfte und/oder Verformungen der Komponente (1) detektierbar sind, und wobei die Messeinrichtung (1a) mindestens zwei Felderzeugungsmittel (3a, 3b) und mindestens zwei Detektionsmittel (5a, 5b) aufweist, wobei die beiden Felderzeugungsmittel (3a, 3b) und die beiden Detektionsmittel (5a, 5b) jeweils auf gegenüberliegenden Seiten der Komponente (1) angeordnet sind und die relative Anordnung der Felderzeugungsmittel (3a, b) und der Detektionsmittel (5a, b) zueinander auf beiden Seiten der Komponente (1) gleich ist, wodurch eine Messung in einer Differenz-Betriebsart ermöglicht ist, **dadurch gekennzeichnet, dass** das Detektionsmittel (5; 5a, b) und das Felderzeugungsmittel (3; 3a, b) im Wesentlichen in einer Ebene angeordnet sind, und zwischen den Felderzeugungsmitteln (3a, b) und der Komponente (1) die zwei Detektionsmittel (5a, b) angeordnet sind, wobei das eine Detektionsmittel (5a) auf der Seite des ersten Felderzeugungsmittels (3a) und das andere Detektionsmittel (5b) auf der Seite des zweiten Felderzeugungsmittels (3b) angeordnet ist.

2. Komponente nach Anspruch 1,
**dadurch gekennzeichnet, dass** die Vorrichtung eine Windkraftanlage ist, insbesondere, dass die Komponente ein im Betrieb bewegtes und/oder belastetes Element der Windkraftanlage, vorzugsweise eine Welle oder ein Rotorblatt der Windkraftanlage ist.

3. Komponente (1) nach Anspruch 1,
**dadurch gekennzeichnet, dass** die Vorrichtung als ein Fahrwerk eines Fahrzeugs und die Komponente (1) als eine Fahrwerkskomponente (1) ausgebildet ist, insbesondere, dass die Fahrwerkskomponente (1) als eine der folgenden Komponenten ausgebildet ist:
- Dämpferelement, vorzugsweise Kolbenstange eines Dämpferelementes;
- Lenker;
- Verbindungsstrebe (1c);
- Pendelstütze;
- Stabilisator;
- Lenkungselement, vorzugsweise eine Lenkstange, Lenksäule oder Spurlenker.

4. Fahrwerkskomponente (1) nach Anspruch 3,
**dadurch gekennzeichnet, dass** das Felderzeugungsmittel (3; 3a, b) und/oder das Detektionsmittel (5; 5a, b) als Spulen ausgebildet sind.

5. Fahrwerkskomponente (1) nach mindestens einem der vorangegangenen Ansprüche 3 bis 4, **dadurch gekennzeichnet, dass** das Felderzeugungsmittel (3; 3a, b) und das Detektionsmittel (5; 5a, b) in einem Gehäuse (2) ortsfest angeordnet sind, welches Gehäuse (2) ortsfest an der Fahrwerkskomponente (1) angeordnet ist, vorzugsweise, dass das Felderzeugungsmittel (3; 3a, b) und das Detektionsmittel (5; 5a, b) in dem Gehäuse (2) mittels einer ausgehärteten Gussmasse (2c) ortfest angeordnet sind.

6. Fahrwerkskomponente (1) nach Anspruch 5,
**dadurch gekennzeichnet, dass** die Fahrwerkskomponente (1) eine Befestigungsstruktur (6c) für das Gehäuse (2) aufweist, vorzugsweise, dass die Befestigungsstruktur (6c) einstückig mit der Fahrwerkskomponente (1), höchst vorzugsweise nach Art einer Aussparung an der Fahrwerkskomponente (1), ausgebildet ist, und dass vorzugsweise die Befestigungsstruktur (6c) durch lokales Verformen der Fahrwerkskomponente (1) ausgebildet ist.

7. Fahrwerkskomponente (1) nach mindestens einem der vorangegangenen Ansprüche 3 bis 6, **dadurch gekennzeichnet, dass** das Felderzeugungsmittel (3; 3a, b) und/oder das Detektionsmittel (5; 5a, b) beabstandet von der Fahrwerkskomponente (1) angeordnet ist/sind.

8. Fahrwerkskomponente (1) nach mindestens einem der vorangegangenen Ansprüche 3 bis 7, **dadurch gekennzeichnet, dass** die Fahrwerkskomponente (1) mindestens eine Schweißnaht (1f) aufweist und dass das Felderzeugungsmittel (3; 3a, b) und/oder das Detektionsmittel (5; 5a, b) an der Fahrwerkskomponente (1) in einem Abstand x zwischen etwa 30 mm und etwa 40 mm, vorzugsweise zwischen etwa 34 mm und etwa 36 mm, höchst vorzugsweise etwa 35 mm, beabstandet von der Schweißnaht (1f) angeordnet ist/sind.

9. Fahrwerkskomponente (1) nach mindestens einem der vorangegangenen Ansprüche 3 bis 8, **dadurch gekennzeichnet, dass** das Felderzeugungsmittel (3; 3a, b) und/oder das Detektionsmittel (5; 5a, b) im Bereich einer neutralen Faser (NF) der Fahrwerkskomponente angeordnet ist.

10. Fahrwerkskomponente (1) nach mindestens einem der vorangegangenen Ansprüche 3 bis 9, **dadurch gekennzeichnet, dass** eine neutrale Faser (NF) der Fahrwerkskomponente (1) in der Ebene liegt.

11. Fahrwerkskomponenten nach Anspruch 10, **dadurch gekennzeichnet, dass** die Ebene etwa senkrecht, vorzugsweise genau senkrecht zu der Hauptbiegeeinrichtung der Fahrwerkskomponente angeordnet ist.

12. Fahrerassistenzsystem für ein Fahrzeug, umfassend eine Fahrwerkskomponente (1) nach mindestens einem der vorangegangenen Ansprüche 3 bis 11, welches Fahrerassistenzsystem vorzugsweise nach Art eines der folgenden Systeme ausgebildet ist:
- ESP,
- ABS,
- Spurassistenzsystem,
- Wankstabilisierungssysteme, insbesondere umfassend einen aktiv steuerbaren oder regelbaren Fahrwerksstabilisator.

13. Diagnosesystem für eine Vorrichtung, umfassend eine Komponente nach mindestens einem der vorangegangenen Ansprüche 1 bis 11, vorzugsweise eine Fahrwerkskomponente (1), welches Diagnosesystem dazu ausgebildet ist, mittels der Messeinrichtung (1a) gewonnene Belastungsdaten der Komponente (1) zu speichern und/oder auszuwerten.

## Claims

1. Component (1) of an apparatus, which component has a measuring device (1a) for measuring forces and at least one metallic, magnetic part region (1b), the measuring device (1a) comprising at least one field generating means (3; 3a, b) for generating an alternating electromagnetic field and at least one detection means (5; 5a, b) for detecting changes in the generated magnetic field, which field generating means (3; 3a, b) and which detection means (5; 5a, b) are arranged on the metallic, magnetic part region (1b) of the component (1) and are configured so as to interact with the latter, in such a way that forces which act on the component (1) and/or deformations of the component (1) can be detected by means of the measuring device (1) in a manner which is dependent on measured signals of the detection means (5; 5a, b), and the measuring device (1a) having at least two field generating means (3a, 3b) and at least two detection means (5a, 5b), the two field generating means (3a, 3b) and the two detection means (5a, 5b) being arranged in each case on opposite sides of the component (1), and the relative arrangement of the field generating means (3a, b) and the detection means (5a, b) with respect to one another on the two sides of the component (1) being identical, as a result of which a measurement in a differential operating mode is made possible, **characterized in that** the detection means (5; 5a, b) and the field generating means (3; 3a, b) are arranged substantially in one plane, and the two detection means (5a, b) are arranged between the field generating means (3a, b) and the component (1), the one detection means (5a) being arranged on the side of the first field generating means (3a), and the other detection means (5b) being arranged on the side of the second field generating means (3b).

2. Component according to Claim 1, **characterized in that** the apparatus is a wind power plant, and, in particular, **in that** the component is an element of the wind power plant which is moved and/or loaded during operation, preferably a shaft or a rotor blade of the wind power plant.

3. Component (1) according to Claim 1, **characterized in that** the apparatus is configured as a chassis of a vehicle and the component (1) is configured as a chassis component (1), and, in particular, **in that** the chassis component (1) is configured as one of the following components:
- damper element, preferably piston rod of a damper element;
- handlebar;
- connecting strut (1c);
- hinged support;
- anti-roll bar;
- steering element, preferably a steering rod, steering column or toe link.

4. Chassis component (1) according to Claim 3, **characterized in that** the field generating means (3; 3a, b) and/or the detection means (5; 5a, b) are/is configured as coils.

5. Chassis component (1) according to at least one of the preceding Claims 3 and 4, **characterized in that** the field generating means (3; 3a, b) and the detection means (5; 5a, b) are arranged in a housing (2) in a stationary manner, which housing (2) is arranged on the chassis component (1) in a stationary manner, and preferably **in that** the field generating means (3; 3a, b) and the detection means (5; 5a, b) are arranged in the housing (2) in a stationary manner by means of a hardened casting compound (2c).

6. Chassis component (1) according to Claim 5, **characterized in that** the chassis component (1) has a fastening structure (6c) for the housing (2), preferably in that the fastening structure (6c) is configured in one piece with the chassis component (1), very highly preferably in the manner of a cut-out on the chassis component (1), and **in that** the fastening structure (6c) is preferably configured by way of local deformation of the chassis component (1).

7. Chassis component (1) according to at least one of the preceding Claims 3 to 6, **characterized in that** the field generating means (3; 3a, b) and/or the detection means (5; 5a, b) are/is arranged spaced apart from the chassis component (1).

8. Chassis component (1) according to at least one of the preceding Claims 3 to 7, **characterized in that** the chassis component (1) has at least one welded seam (1f), and **in that** the field generating means (3; 3a, b) and/or the detection means (5; 5a, b) are/is arranged on the chassis component (1) spaced apart from the welded seam (1f) at a spacing x between approximately 30 mm and approximately 40 mm, preferably between approximately 34 mm and approximately 36 mm, very highly preferably approximately 35 mm.

9. Chassis component (1) according to at least one of the preceding Claims 3 to 8, **characterized in that** the field generating means (3; 3a, b) and/or the detection means (5; 5a, b) are/is arranged in the region of a neutral axis (NF) of the chassis component.

10. Chassis component (1) according to at least one of the preceding Claims 3 to 9, **characterized in that** a neutral axis (NF) of the chassis component (1) lies in the plane.

11. Chassis components according to Claim 10, **characterized in that** the plane is arranged approximately perpendicularly, preferably precisely perpendicularly with respect to the main bending device of the chassis component.

12. Driver assistance system for a vehicle, comprising a chassis component (1) according to at least one of the preceding Claims 3 to 11, which driver assistance system is preferably configured in the manner of one of the following systems:
- ESP,
- ABS,
- lane departure warning system,
- active roll stabilization systems, in particular comprising an actively controllable or regulatable chassis anti-roll bar.

13. Diagnosis system for an apparatus, comprising a component according to at least one of the preceding Claims 1 to 11, preferably a chassis component (1), which diagnosis system is configured to store and/or evaluate loading data of the component (1) which are obtained by means of the measuring device (1a).

## Revendications

1. Composant (1) d'un dispositif, composant qui présente un dispositif de mesure (1a) pour mesurer des forces et au moins une région partielle métallique magnétique (1b), dans lequel le dispositif de mesure (1a) comprend au moins un moyen de production de champ (3; 3a, b) pour produire un champ électromagnétique alternatif et au moins un moyen de détection (5; 5a, b) pour détecter des variations du champ magnétique produit, le moyen de production de champ (3; 3a, b) et le moyen de détection (5; 5a, b) sont disposés sur la région partielle métallique magnétique du composant (1) et sont formés en coopération avec celle-ci, de telle manière que des forces agissant sur le composant (1) et/ou des déformations du composant (1) puissent être détectées au moyen du dispositif de mesure (1) en fonction de signaux de mesure du moyen de détection (5; 5a, b), et dans lequel le dispositif de mesure (1a) présente au moins deux moyens de production de champ (3a, 3b) et au moins deux moyens de détection (5a, 5b), dans lequel les deux moyens de production de champ (3a, 3b) et les deux moyens de détection (5a, 5b) sont disposés respectivement sur des côtés opposés du composant (1) et la disposition relative des moyens de production de champ (3a, b) et des moyens de détection (5a, b) les uns par rapport aux autres est identique sur les deux côtés du composant (1), ce qui permet une mesure dans un mode de fonctionnement par différence, **caractérisé en ce que** le moyen de détection (5; 5a, b) et le moyen de production de champ (3; 3a, b) sont disposés essentiellement dans un plan, et les deux moyens de détection (5a, b) sont disposés entre les moyens de production de champ (3a, b) et le composant (1), dans lequel un premier moyen de détection (5a) est disposé sur le côté du premier moyen de production de champ (3a) et l'autre moyen de détection (5b) est disposé sur le côté du deuxième moyen de production de champ (3b) .

2. Composant selon la revendication 1, **caractérisé en ce que** le dispositif est une éolienne, en particulier **en ce que** le composant est un élément de l'éolienne déplacé et/ou chargé pendant le fonctionnement, de préférence un arbre ou une pale de rotor de l'éolienne.

3. Composant (1) selon la revendication 1, **caractérisé en ce que** le dispositif est un train roulant d'un véhicule et le composant (1) est un composant (1) de train roulant, en particulier **en ce que** le composant (1) de train roulant est constitué par un des composants suivants:
- élément d'amortissement, de préférence tige de piston d'un élément d'amortissement;
- volant de direction;
- barre de connexion (1c);
- bras oscillant;
- stabilisateur;
- élément de direction, de préférence barre de direction, colonne de direction ou biellette.

4. Composant (1) de train roulant selon la revendication 3, **caractérisé en ce que** le moyen de production de champ (3; 3a, b) et/ou le moyen de détection (5; 5a, b) sont réalisés sous forme de bobines.

5. Composant (1) de train roulant selon au moins une des revendications précédentes 3 à 4, **caractérisé en ce que** le moyen de production de champ (3; 3a, b) et le moyen de détection (5; 5a, b) sont disposés de façon fixe dans un boîtier (2), boîtier (2) qui est disposé de façon fixe sur le composant (1) de train roulant, de préférence en ce que le moyen de production de champ (3; 3a, b) et le moyen de détection (5; 5a, b) sont disposés de façon fixe dans le boîtier (2) au moyen d'une masse de moulage durcie (2c).

6. Composant (1) de train roulant selon la revendication 5, **caractérisé en ce que** le composant (1) de train roulant présente une structure de fixation (6c) pour le boîtier (2), de préférence **en ce que** la structure de fixation (6c) est réalisée d'un seul tenant avec le composant (1) de train roulant, de préférence encore à la manière d'une découpe dans le composant (1) de train roulant, et **en ce que** la structure de fixation (6c) est réalisée de préférence par une déformation locale du composant (1) de train roulant.

7. Composant (1) de train roulant selon au moins une des revendications précédentes 3 à 6, **caractérisé en ce que** le moyen de production de champ (3; 3a, b) et/ou le moyen de détection (5; 5a, b) est/sont disposé(s) à distance du composant (1) de train roulant.

8. Composant (1) de train roulant selon au moins une des revendications précédentes 3 à 7, **caractérisé en ce que** le composant (1) de train roulant présente au moins un cordon de soudure (1f), et **en ce que** le moyen de production de champ (3; 3a, b) et/ou le moyen de détection (5; 5a, b) est/sont disposé(s) à distance du cordon de soudure à une distance x comprise entre environ 30 mm et environ 40 mm, de préférence entre environ 34 mm et environ 36 mm, et de préférence encore d'environ 35 mm.

9. Composant (1) de train roulant selon au moins une des revendications précédentes 3 à 8, **caractérisé en ce que** le moyen de production de champ (3; 3a, b) et/ou le moyen de détection (5; 5a, b) est disposé dans la région d'une fibre neutre (NF) du composant de train roulant.

10. Composant (1) de train roulant selon au moins une des revendications précédentes 3 à 9, **caractérisé en ce qu'**une fibre neutre (NF) du composant (1) de train roulant est située dans le plan.

11. Composant (1) de train roulant selon la revendication 10, **caractérisé en ce que** le plan est disposé sensiblement perpendiculairement, de préférence exactement perpendiculairement au dispositif de flexion principal du composant de train roulant.

12. Système d'aide à la conduite pour un véhicule, comprenant un composant (1) de train roulant selon au moins une des revendications précédentes 3 à 11, système d'aide à la conduite qui est réalisé de préférence à la manière d'un des systèmes suivants:
- ESP,
- ABS,
- système d'assistance de trajectoire,
- systèmes de stabilisation de roulis, comprenant en particulier un stabilisateur de train roulant pouvant être commandé ou régulé de façon active.

13. Système de diagnostic pour un dispositif, comprenant un composant selon au moins une des revendications précédentes 1 à 11, de préférence un composant (1) de train roulant, système de diagnostic qui est configuré pour mémoriser et/ou évaluer des données de charge du composant (1) récoltées au moyen du dispositif de mesure (1a).
